# EUROPEAN PATENT APPLICATION

(11) **EP 2 381 444 A1**
(43) Date of publication of application: **26.10.2011**
(21) Application number: 09834533.3
(22) Date of filing: 25.12.2009
(51) Int. Cl.: G11B 7/26, G11B 7/004, G11B 7/24

(54) **METHOD FOR INSPECTING OPTICAL INFORMATION RECORDING MEDIUM, METHOD FOR MANUFACTURING OPTICAL INFORMATION RECORDING MEDIUM, APPARATUS FOR INSPECTING OPTICAL INFORMATION RECORDING MEDIUM, APPARATUS FOR RECORDING INFORMATION ON OPTICAL INFORMATION RECORDING MEDIUM, AND OPTICAL INFORMATION RECORDING MEDIUM**

(30) Priority: 25.12.2008 JP 2008330863; 25.12.2009 JP 2009296112
(71) Applicant: Sharp Kabushiki Kaisha, Osaka-shi, Osaka 545-8522 (JP)
(72) Inventor: TAJIMA, Hideharu, Osaka 545-8522 (JP); MAEDA, Shigemi, Osaka 545-8522 (JP); ADACHI, Yoshihisa, Osaka 545-8522 (JP); HAYASHI, Tetsuya, Osaka 545-8522 (JP); ETOH, Atsushi, Osaka 545-8522 (JP); YAMAMOTO, Masaki, Osaka 545-8522 (JP)
(74) Representative: Müller - Hoffmann & Partner
(86) International application number: PCT/JP2009/007313
(87) International publication number: WO 2010/073727

(57) **Abstract**

A method for checking an optical information storage medium is provided in which method the optical information storage medium is evaluated and sorted out, with a predetermined standard, in view of an off-track recording which occurs in the optical information storage medium. The method for checking an optical information storage medium of the present invention is a method for checking a quality of an optical information storage medium by irradiating a recordable recording layer of the optical information storage medium with a light beam and then receiving light reflected from the recording layer. The method includes the steps of: (a) detecting a differential signal with the use of first and second light receiving sections which are provided in this order in a track direction of a recording layer; and (b) judging a quality of the optical information storage medium based on the detected differential signal.

## Description

### Technical Field

The present invention relates to an optical information storage medium into which an information signal can be optically written and from which the information signal can be optically read out. The present invention relates particularly to (i) a method for checking the optical information storage medium, (ii) a method for producing the optical information storage medium, (iii) a checking device for the optical information storage medium, and (iv) a recording device for the optical information storage medium.

### Background Art

In these years, an optical information storage medium is capable of storing a large amount of information signals in a high density, and therefore has been used in various fields such as of audio, video, and computer. In particular, an amount of data such as moving image information, which is to be dealt with a device such as a computer, is drastically increased these days. This has been accompanied by an increase in use of an optical information storage medium made up of stacked recording layers.

In order to reproduce an information signal stored, in micron, in such an optical information storage medium, it is necessary to cause a light beam to accurately track a position of a track onto which the information to be reproduced is recorded.

In general, there occurs a positional error between a track and a laser beam due to (i) deviation of a rotation axis of the optical information storage medium and (ii) eccentricity of a center hole and the track of the optical information storage medium. A tracking is carried out by detecting the positional error and controlling a position of the laser beam so that the laser beam accurately traces the track.

In general, a push-pull method is used in a tracking. According to the push-pull method, light, which is reflected and diffracted on an optical information storage medium, is detected by two light-detectors provided symmetrically with respect to a center of a track, and then a tracking error is detected based on a signal indicative of a difference between the detected results (see, for example, Patent Literatures 1 through 3).

Optical disks such as CDs and DVDs are widely used as the optical information storage medium, and types of the optical disks can be classified into three types, i.e., (i) a read only type called "ROM", (ii) a write-once type, and (iii) a rewritable type. A recording/ reproducing device for such optical disks has been developed and spread remarkably.

It is known that there occurs a "super ROM phenomenon" in a read-only optical information storage medium (see Patent Literature 4 and Non Patent Literature 1).

The "super ROM phenomenon" is one of super-resolution techniques which enable a high-definition reproduction which exceeds a diffraction limit of an optical system. In this phenomenon, it is possible to read out an information signal from a disk, which has a track pitch narrower than the diffraction limit, by providing, as a reflection layer, a predetermined material on the disk. This phenomenon highly tends to depend on a temperature of the reflection layer which temperature varies due to an irradiation of a laser beam. In the existing circumstances, the degree of occurrence of the "super ROM phenomenon" tends to be higher as the temperature increases.

### Citation List

### [Patent Literature]

### Patent Literature 1

Japanese Patent Application Publication, Tokukaihei, No. 5-47016 (Publication Date: February 26, 1993)

### Patent Literature 2

Japanese Patent Application Publication, Tokukaihei, No. 9-35284 (Publication Date: February 7, 1997)

### Patent Literature 3

Japanese Patent Application Publication, Tokukaihei, No. 9-35290 (Publication Date: February 7, 1997)

### Patent Literature 4

Japanese Patent Application Publication, Tokukai, No. 2001-250274 (Publication Date: September 14, 2001)

### [Non Patent Literature]

### Non Patent Literature 1

Takashi KIKUKAWA, Tatsuya KATO, Hiroshi SHINGAI and Hajime UTSUNOMIYA, "High-Density Read-Only Memory Disc with Super Resolution Reflective Layer" Jpn. J. Appl.Phys. Vol. 40 (2001) pp.1624-1628 Part 1, No. 3B, March 2001

### Summary of Invention

### Technical Problem

The inventors found that (i) the super ROM phenomenon occurs also in a recordable optical information storage medium and (ii) there is a problem that a recording mark is not appropriately recorded when the super ROM phenomenon occurs when recording information onto a recordable medium. Hereinafter, inappropriate recording is referred to as "off-track recording". The super ROM phenomenon which occurs in the recordable medium will be described later.

In view of the problem, an object of the present invention is to provide (i) a method for checking an optical information storage medium by evaluating and sorting out, with a predetermined standard, the optical information storage medium in view of a degree of occurrence of off-track recording which occurs in the optical information storage medium, (ii) a method for producing an optical information storage medium, (iii) a checking device for an optical information storage medium, (iv) a recording device for an optical information storage medium, and (v) an optical information storage medium.

### Solution to Problem

According to a high-speed recording write-once disk, a recording is carried out with a higher recording power, as compared to a low-speed recording. In the high-speed recording, temperature distribution in a radial direction of the disk can occur, due to a characteristic of a laser light source of a pickup, in a laser spot generated by a laser irradiation.

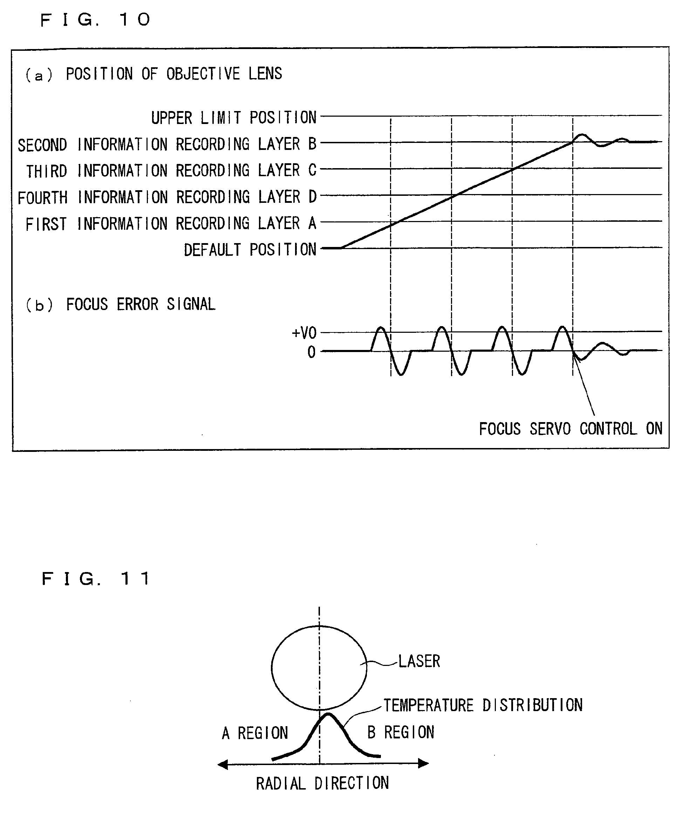

In a case of a laser irradiation, for example, shown in Fig. 11, there occurs, by the laser irradiation, a difference in temperature distribution between an area A and an area B in a laser spot on a disk. Note that the laser spot is divided, in a radial direction of the disk, into the areas A and B by a line along an optical axis of the laser beam.

The inventors found, through studies, that a positional displacement of a recording mark with respect to a track on the disk can occur in such a case where the difference in temperature distribution occurs. The following describes how such a positional displacement occurs.

First, a degree of occurrence of the "super ROM phenomenon" differs between an inner periphery side and an outer periphery side of the laser spot in a high-speed recording which requires a high recording power. As a result, it seems that a phase shift of a push-pull signal, which is used in the push-pull method, can occur between the inner periphery side and the outer periphery side of the laser spot.

In a case where a tracking is carried out based on the push-pull signal whose phase is shifted, a beam spot is moved in the radial direction, and therefore a positional displacement of a recording mark with respect to a track on the disk occurs when the recording mark is recorded.

Hereinafter, the recording of the recording mark, which is carried out while the positional displacement of the beam spot is occurring, is referred to as "off-track recording" as the above described "off-track recording".

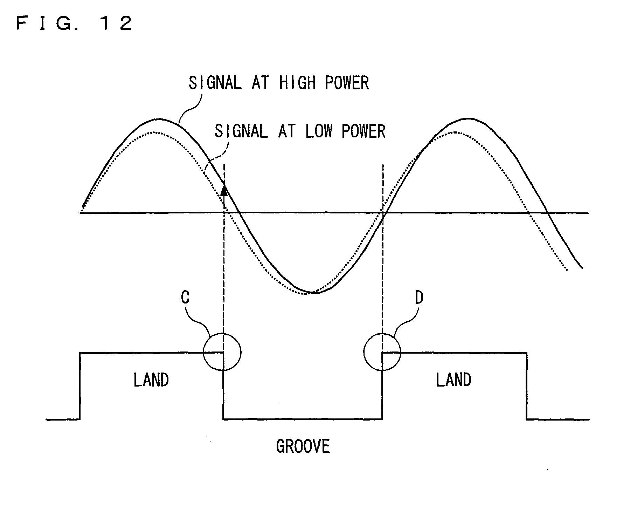

The write-once disk has, for example, a concave groove and a convex land which are provided at a predetermined track pitch on a surface of the write-once disk (see Fig. 12). The groove and the land are provided helically or concentrically on the surface of the write-once disk. According to the write-once disk, an information signal is recorded onto the groove and the land.

In a case where a scanning is carried out with the use of a laser beam on the write-once disk in a radial direction of the disk, a laser spot is to move on the convex-concave surface made up of the groove and the land. As a result, in the example shown in Fig. 12, a difference in temperature increase occurs between a part indicated by C and a part indicated by D. Specifically, the part C becomes to have a temperature higher than that of the part D. This phenomenon occurs even when temperature distribution in the laser spot is uniform.

Even in the write-once disks, in a case where a recording is carried out with a higher recording power, a degree of occurrence of the "super ROM phenomenon" differs between the part C and the part D, as with the case described above. Specifically, a reflectance of the part C, whose temperature increase is higher, becomes high, and therefore, from the part C, a push-pull signal is generated, whose phase is apparently shifted and light amount is larger, as compared to a push-pull signal generated with a low recording power.

The phenomenon described above occurs, in a case where the recording power of laser beam, with which the write-once disk is irradiated, becomes high. This causes a phase of the push-pull signal to be shifted between the inner periphery side and the outer periphery side of the laser spot, and consequently, the off-track recording occurs.

In this way, the inventors confirmed the off-track recording caused by the "super ROM phenomenon" in the optical information storage medium such as the write-once disk.

The inventors found, through diligent studies, (i) the method for checking an optical information storage medium by evaluating and sorting out, with a predetermined standard, an optical information storage medium in view of an off-track recording which occurs in the optical information storage medium such as the write-once disk, (ii) the method for producing the optical information storage medium, (iii) the checking device for the optical information storage medium, and (iv) the optical information storage medium.

That is, a method for checking an optical information storage medium of the present invention is a method for checking a quality of an optical information storage medium by irradiating a recordable recording layer of the optical information storage medium with a light beam and then receiving light reflected from the recording layer, the method including the steps of: (a) detecting levels of first light and second light, which are reflected from the recording layer and are received by first and second light receiving sections, respectively, the first and second light receiving sections being provided, in this order, in a track direction of the recording layer; and (b) judging a quality of the optical information storage medium based on a comparison result between the levels of the first light and the second light.

According to the method for checking an optical information storage medium, the first light receiving section and the second light receiving section, which receive light reflected from the recording layer, are provided in this order in the track direction of the recording layer of the optical information storage medium. This allows the levels of the first light and second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in the beam spot, generated when the recording layer is scanned by the beam spot. This makes it possible to uniformize temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the track when the beam spot traverses the track, cannot be evaluated at a constant linear velocity because a speed of the beam spot traversing the track varies depending on a degree of eccentricity of the optical information storage medium.

According to the method for checking the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in the optical information storage medium.

A method for checking an optical information storage medium of the present invention is a method for checking a quality of an optical information storage medium by irradiating a recordable recording layer of the optical information storage medium with a light beam and then receiving light reflected from the recording layer, the method including the steps of: (a) detecting, while irradiating the recording layer with a light beam having a first beam power, levels of first light and second light which are reflected from the recording layer and are received by first and second light receiving sections, respectively, the first and second light receiving sections being provided, in this order, in a track direction of the recording layer; (b) calculating a first difference between the levels of the first light and the second light detected in the step (a); (c) detecting, while irradiating the recording layer with a light beam having a second beam power which is higher than the first beam power, levels of third light and fourth light which are reflected from the recording layer and are received by the first and second light receiving sections, respectively; (d) calculating a second difference between the levels of the third light and the fourth light detected in the step (c); and (e) judging a quality of the optical information storage medium based on a comparison result between the first difference calculated in the step (b) and the second difference calculated in the step (d).

According to the method for checking the optical information storage medium, the first light receiving section and the second light receiving section, which receive light reflected from the recording layer, are provided in this order in the track direction of the recording layer of the optical information storage medium. This allows the levels of the first light and second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in a beam spot, generated when the recording layer is scanned by the beam spot. This makes it possible to carry out a comparison in a case where a beam power is high while uniformizing temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the track when the beam spot traverses the track, cannot be evaluated at a constant linear velocity because a speed of the beam spot traversing the track varies depending on a degree of eccentricity of the optical information storage medium.

According to the method for checking the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in the optical information storage medium.

Moreover, according to the method for checking the optical information storage medium, a difference between levels of first light and second light is calculated every time the optical information storage medium is irradiated with each light beam having different beam power. The quality of the optical information storage medium is judged based on a compared result of the differences thus calculated.

This makes it possible to carry out a more accurate checking than a checking with the use of levels of reflected light obtained by irradiation of a single beam power.

A checking device for an optical information storage medium of the present invention is a checking device for checking a quality of an optical information storage medium by irradiating a recordable recording layer of the optical information storage medium with a light beam and then receiving light reflected from the recording layer, the checking device including: first and second light receiving sections which are provided, in this order, in a track direction of the recording layer; a detecting section which detects levels of first light and second light, which are reflected from the recording layer and are received by the first and second light receiving sections, respectively; and a judging section which judges a quality of the optical information storage medium based on a comparison result between the levels of the first light and the second light.

According to the checking device for the optical information storage medium, the first light receiving section and the second light receiving section, which receive light reflected from the recording layer, are provided in this order in the track direction of the recording layer of the optical information storage medium. This allows the levels of the first light and the second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in the beam spot, generated when the recording layer is scanned by the beam spot. This makes it possible to carry out a comparison in a case where a beam power is high while uniformizing temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the recording layer, cannot be evaluated at a constant linear velocity because a speed of the beam spot traversing the track varies depending on a degree of eccentricity of the optical information storage medium.

According to the checking device for the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in an optical information storage medium.

A recording device for an optical information storage medium of the present invention is a recording device for an optical information storage medium, the recording device recording information on a recordable recording layer of the optical information storage medium by irradiating the recording layer with a light beam, the recording device including: first and second light receiving sections which are provided, in this order, in a track direction of the recording layer; a detecting section which detects levels of first light and second light, which are reflected from the recording layer and are received by the first and second light receiving sections, respectively; and a determining section which determines, when recording information onto the recording layer, an offset amount based on a comparison result between the levels of the first light and the second light, the offset amount being occurred in a radial direction of the optical information storage medium.

According to the recording device for the optical information storage medium, the first and second light receiving sections are provided in the track direction. This makes it possible to evaluate the optical information storage medium at a constant linear velocity by rotating the optical information storage medium at an arbitrary rotating speed.

It is therefore possible (i) to evaluate an off-track recording, which occurs in an optical information storage medium, with a predetermined standard and (ii) to determine an offset amount which is used in recording of the optical information storage medium based on an evaluated result.

This makes it possible to set an optimal offset amount for an optical information storage medium, in which an offset recording occurred, in reproducing the optical information storage medium. It is therefore possible to prevent defective reproduction.

### Advantageous Effects of Invention

According to the present invention, it is possible to evaluate and sort out, with a certain standard, an optical information storage medium in view of an off-track recording which occurs in the optical information storage medium.

### Brief Description of Drawings

Fig. 1

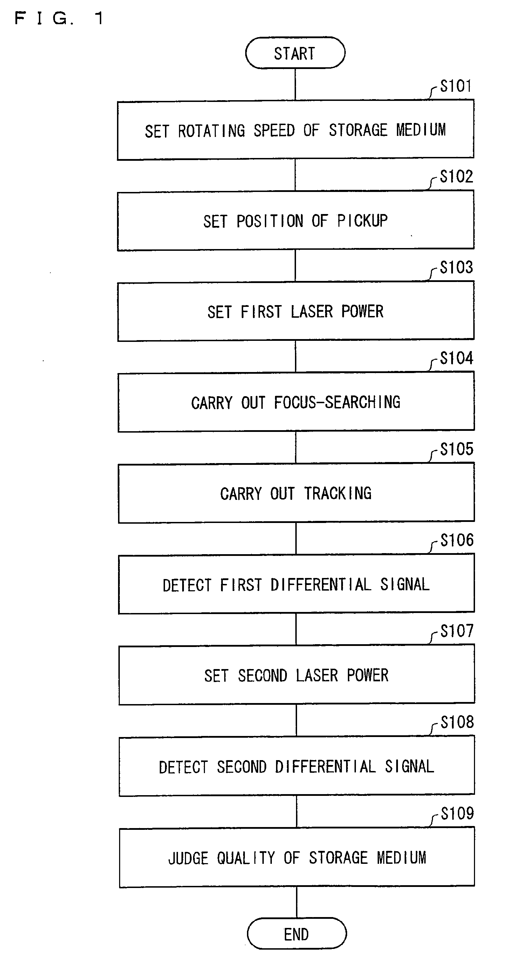

   Fig. 1 is a flow chart illustrating procedures in checking an optical information storage medium in accordance with Embodiment 1 of the present invention.
Fig. 2

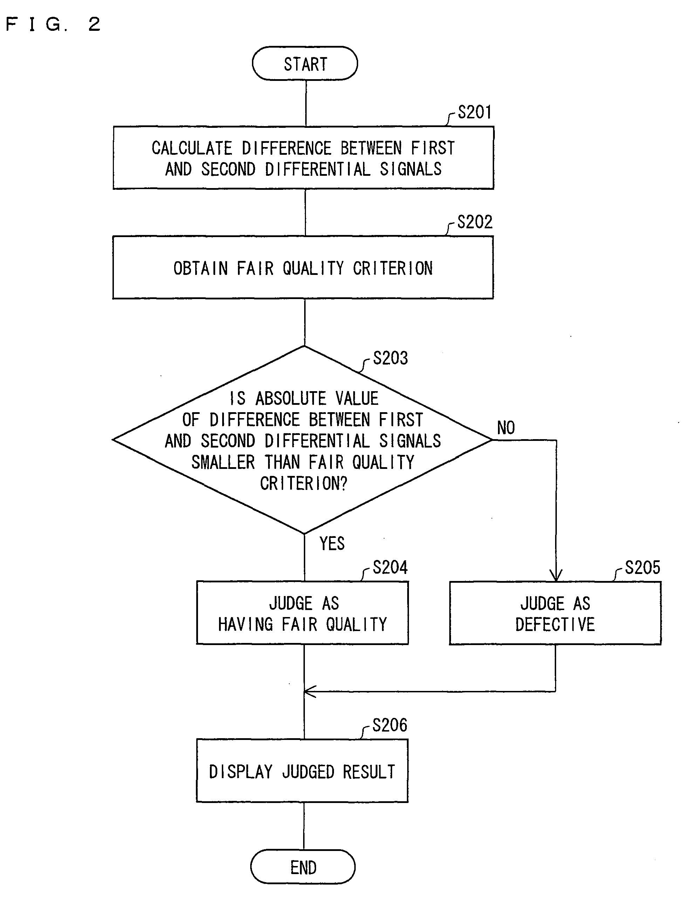

   Fig. 2 is a flow chart illustrating procedures of the step S109 shown in Fig. 1.
Fig. 3

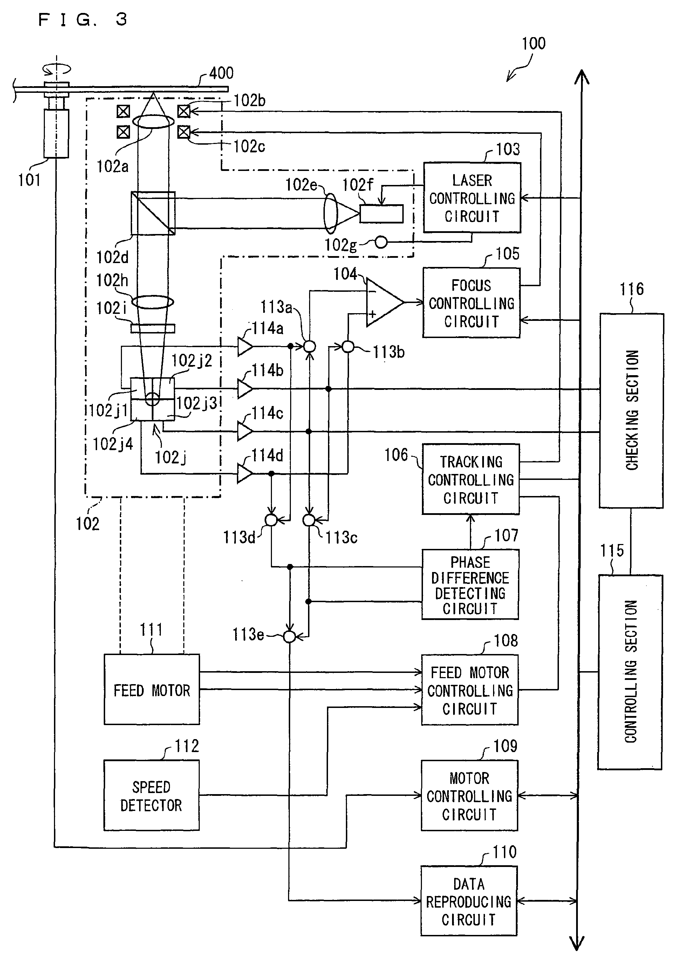

   Fig. 3 is an explanatory view illustrating an example of a reproduction system for reproducing an optical information storage medium in accordance with Embodiment 1 of the present invention.
Fig. 4

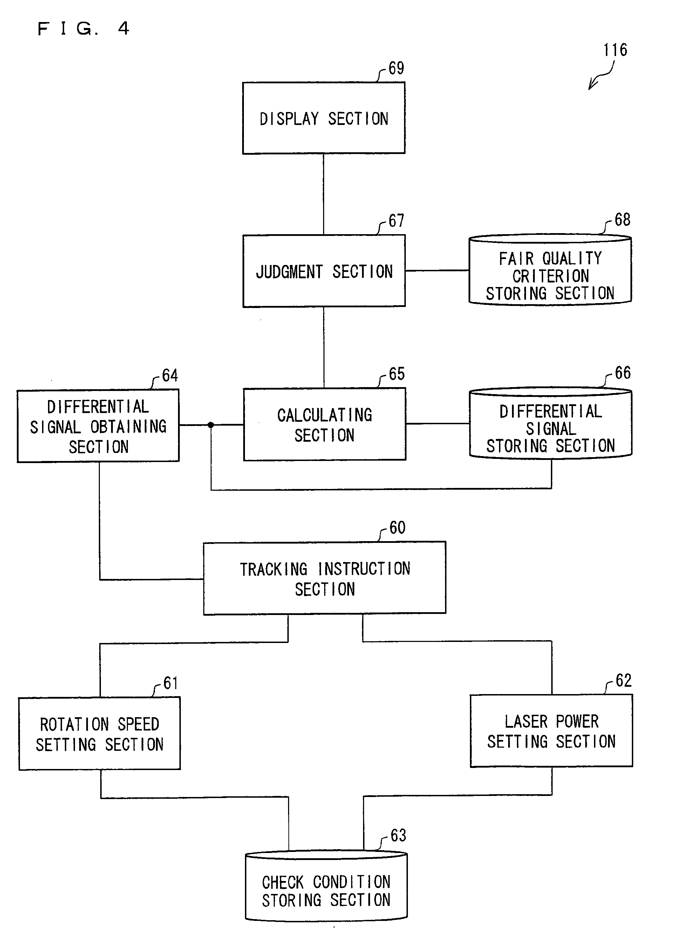

   Fig. 4 is a block diagram illustrating a configuration of a checking section shown in Fig. 3.
Fig. 5

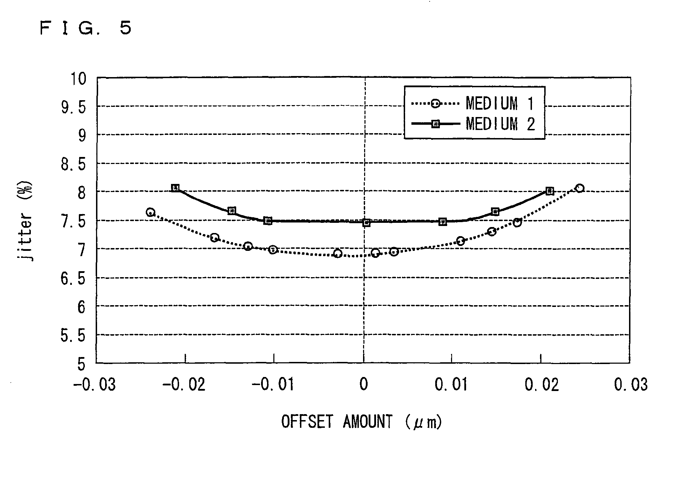

   Fig. 5 is a graph illustrating a relation between an offset amount and a jitter.
Fig. 6

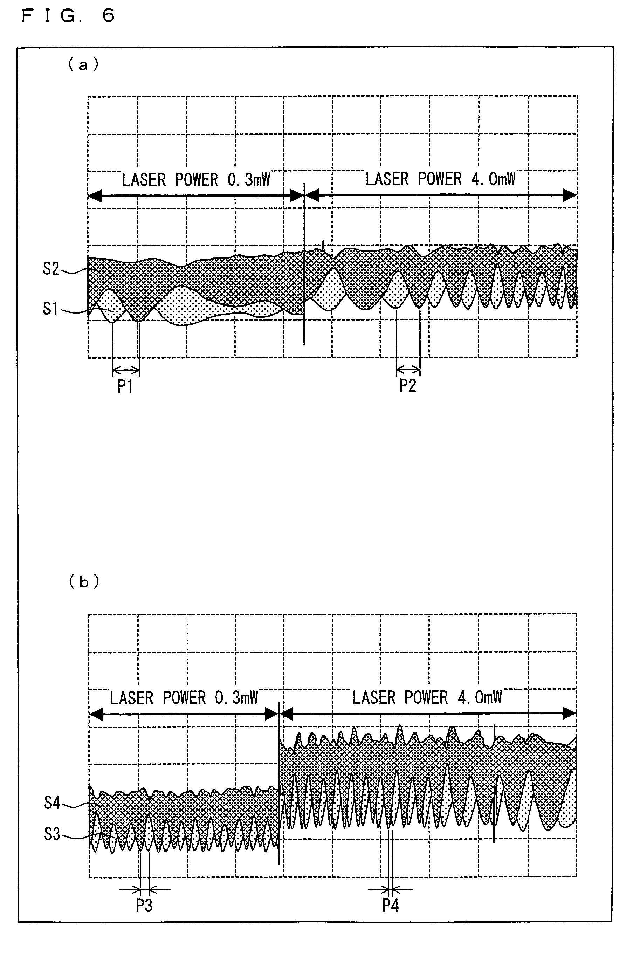

   Fig. 6 is a graph illustrating measured results, for each reproducing power, of an inner periphery side signal and an outer periphery side signal in a light-receiving section, where (a) illustrates a result regarding a medium 4 and (b) illustrates a result regarding a medium 3.
Fig. 7

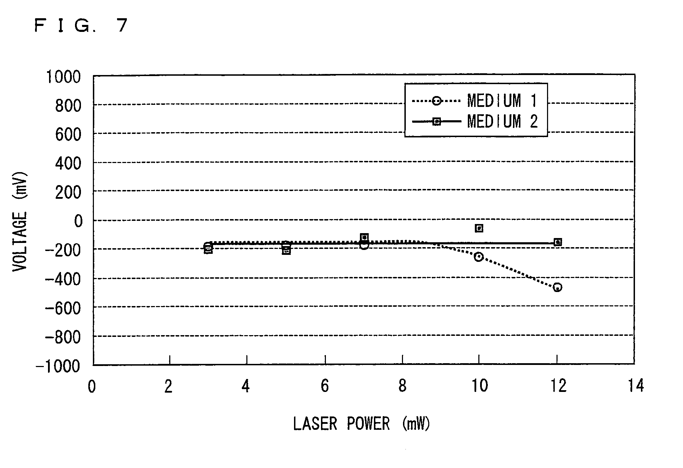

   Fig. 7 is a graph illustrating a relation between a laser power and a voltage difference between an inner periphery side signal and an outer periphery side signal in the light-receiving section.
Fig. 8

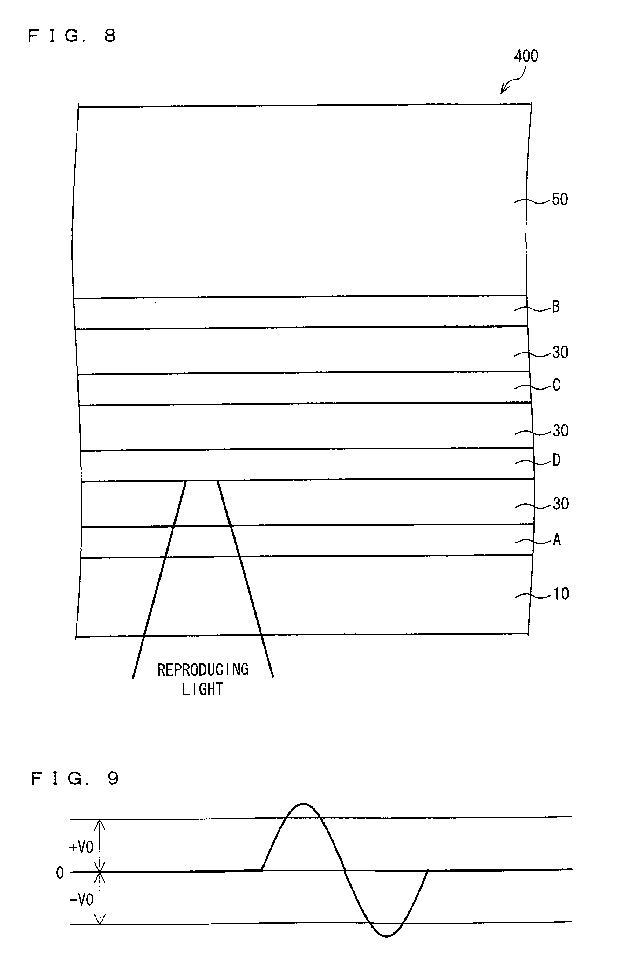

   Fig. 8 is a cross-sectional view illustrating a conventional optical information storage medium having a four-layer configuration.
Fig. 9
   Fig. 9 is an explanatory view illustrating an S-shaped characteristic in a reproduction system shown in Fig. 3.
Fig. 10
   Fig. 10 is a view illustrating (i) a positional transition of an objective lens and (ii) a focus error signal when a focus-searching process is carried out with respect to a second information recording layer shown in Fig. 8 by the reproduction system shown in Fig. 3, where (a) of Fig. 10 illustrates the positional transition of an objective lens and (b) of Fig. 10 illustrates the focus error signal.
Fig. 11
   Fig. 11 is an explanatory view for describing temperature distribution in a laser spot.
Fig. 12
   Fig. 12 is an explanatory view for describing a state where a concave groove and a convex land are being irradiated with a laser beam.
Fig. 13

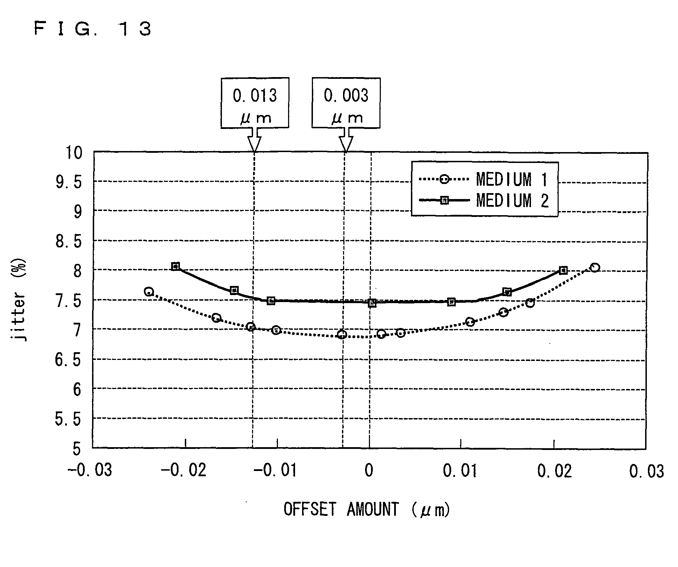

   Fig. 13 is a graph illustrating a relation between an offset amount and a jitter.
Fig. 14

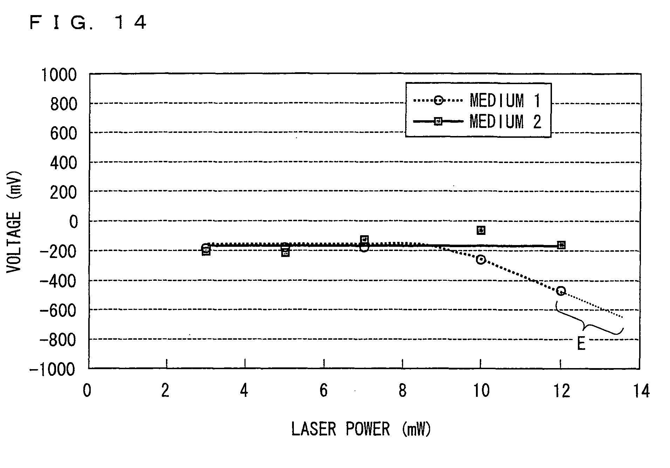

   Fig. 14 is a graph illustrating a relation between a laser power and a voltage difference between an inner periphery side signal and an outer periphery side signal in the light-receiving section.
Fig. 15

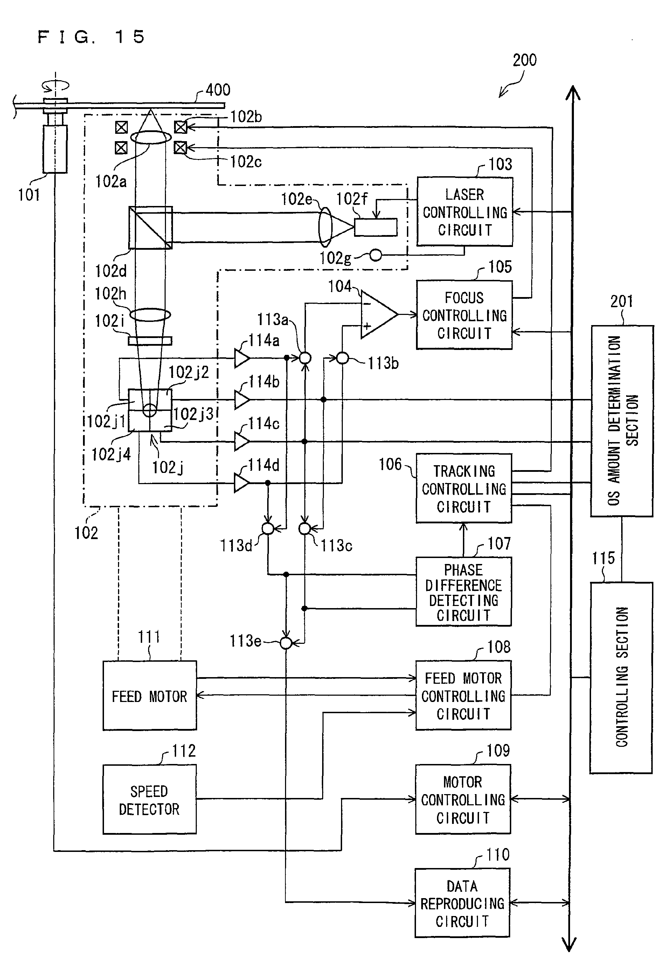

   Fig. 15 is an explanatory view illustrating an example of a recording/ reproducing system for recording/reproducing an optical information storage medium in accordance with Embodiment 2 of the present invention.
Fig. 16

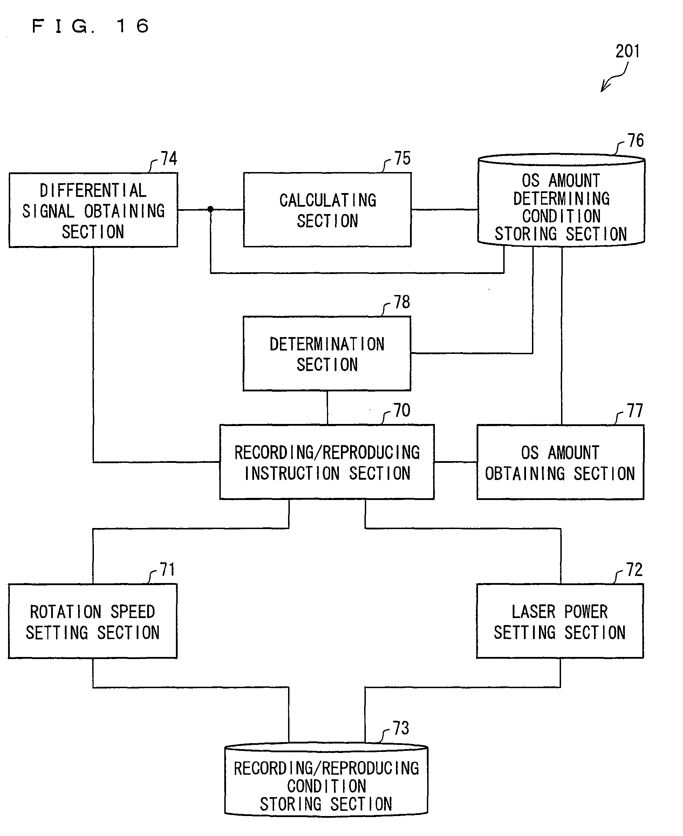

   Fig. 16 is a block diagram illustrating a configuration of an offset amount determining section shown in Fig. 15.
Fig. 17

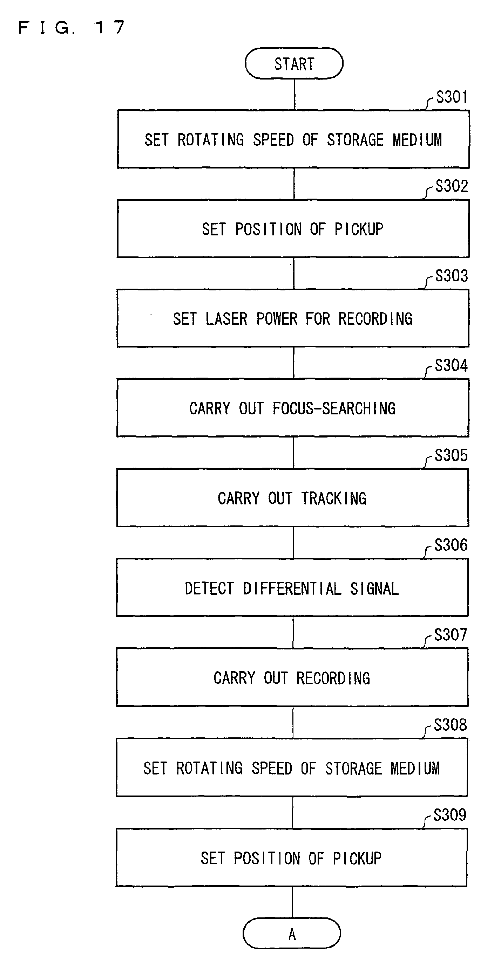

   Fig. 17 is a flow chart (No. 1) illustrating procedures in a recording on an optical information storage medium in accordance with Embodiment 2 of the present invention.
Fig. 18

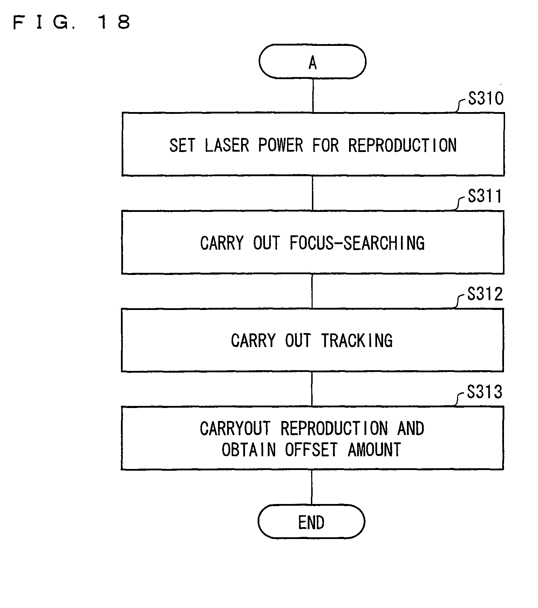

   Fig. 18 is a flow chart (No. 2) illustrating procedures in a recording on an optical information storage medium in accordance with Embodiment 2 of the present invention.
Fig. 19

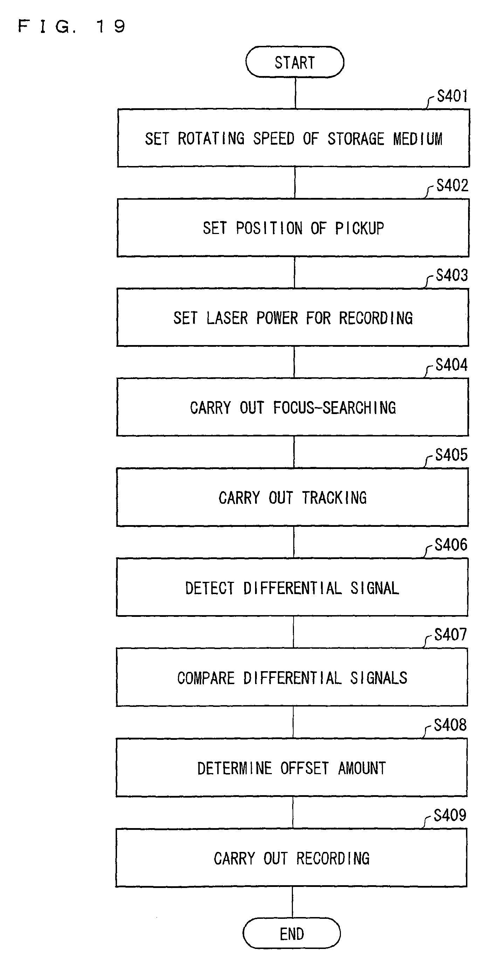

   Fig. 19 is a flow chart (No. 3) illustrating procedures in a recording on an optical information storage medium in accordance with Embodiment 2 of the present invention.

### Description of Embodiments

The following describes an embodiment of the present invention with reference to drawings. Note that the identical reference numerals are given to members having identical reference numerals, and descriptions of such members whose reference numerals are indicated in the drawings are sometimes omitted.

### (Embodiment 1)

Fig. 3 is a block diagram illustrating a configuration of a reproduction system of an optical information storage medium in accordance with Embodiment 1 of the present invention. A reproduction system 100 of the present embodiment reproduces a general multilayer optical information storage medium, and evaluates and sorts out the multilayer optical information storage medium in view of a degree of occurrence of a "super ROM phenomenon".

The following describes a four-layer optical information storage medium 400 (see Fig. 8) as an example of an optical information storage medium which is to be reproduced, evaluated, and sorted out by the reproduction system 100.

The reproduction system 100 includes a disk driving motor 101 which rotates the optical information storage medium 400 having an disk-shape at a predetermined speed (see Fig. 3). The disk driving motor 101 is controlled by a motor controlling circuit 109. Moreover, an optical pickup 102 reads out information from the optical information storage medium 400 which is being rotated.

The optical pickup 102 is configured so as to be moved, by driving force generated by a feed motor 111, in a radial direction of the optical information storage medium 400. The feed motor 111 is controlled by a feed motor controlling circuit 108. Moreover, the feed motor 111 is configured so that a rotational speed of the feed motor 111 is detected by a speed detector 112. The speed detector 112 supplies, as a speed signal, a detected result to the feed motor controlling circuit 108.

The optical pickup 102 includes an objective lens 102a. The objective lens 102a is supported so that the objective lens 102a can be moved in a focus direction (optical axis direction) and in a tracking direction (the radial direction of the optical information storage medium 400). A position of the objective lens 102a is controlled in the focus direction in response to a focus controlling signal being supplied to a focus driving coil 102c, which focus controlling signal is generated by a focus controlling circuit 105.

Similarly, a position of the objective lens 102a is controlled in the tracking direction in response to a tracking controlling signal being supplied to a tracking driving coil 102b, which tracking controlling signal is generated by a tracking controlling circuit 106.

A laser controlling circuit 103 drives a semiconductor laser oscillator 102f, which is provided in the optical pickup 102, so that the semiconductor laser oscillator 102f emits a laser beam. A light amount detector 102g detects an amount of a laser beam emitted by the semiconductor laser oscillator 102f and then feeds back a detected result to the laser controlling circuit 103. With the configuration, the laser controlling circuit 103 can control the semiconductor laser oscillator 102f to emit a laser beam whose amount is constant.

The laser beam emitted by the semiconductor laser oscillator 102f passes through a collimator lens 102e and is then refracted by a half prism 102d at a right angle. Then, the laser beam thus refracted is converged, by the objective lens 102a, onto any one of information recording layers of the optical information storage medium 400.

The "any one of information recording layers of the optical information storage medium 400" indicates any one of a first information recording layer A, a second information recording layer B, a third information recording layer C, and a fourth information recording layer D, which are shown in Fig. 8. Note that each of the first information recording layer A, the second information recording layer B, the third information recording layer C, and the fourth information recording layer D is an ROM layer, from which information can only be read out and on which (i) APC (AgPdCu) is deposited on a pre-pit made up of a convex and a concave which are provided based on recorded information and (ii) a shape of the APC (AgPdCu) is fixed. Note that the optical information storage medium 400 further includes a light-transmitting layer 10, three intermediate layers 30, and a substrate 50.

The optical information storage medium 400 reflects light, and the light travels back into the objective lens 102a, goes straight and passes through the half prism 102d, and then reaches a photoelectric converter 102j via a converging lens 102h and a cylindrical lens 102i. The photoelectric converter 102j is made up of four photodetectors 102j1 through 102j4, each of which generates an electric signal in accordance with an amount of received light.

In a case of the photoelectric converter 102j, the photodetector 102j1 and the photodetector 102j2 are juxtaposed to each other in the tracking direction of the optical information storage medium 400. Similarly, the photodetector 102j3 and the photodetector 102j4 are juxtaposed to each other in the tracking direction of the optical information storage medium 400.

Moreover, the photodetector 102j1 1 and the photodetector 102j4 are juxtaposed to each other in a tangential direction of the optical information storage medium 400. Similarly, the photodetector 102j2 and the photodetector 102j3 are juxtaposed to each other in the tangential direction of the optical information storage medium 400.

The electric signal of the photodetector 102j1 is supplied to one terminals of respective adder circuits 113a and 113d, via an amplifier circuit 114a. The electric signal of the photodetector 102j2 is supplied to one terminals of respective adder circuits 113b and 113c, via an amplifier circuit 114b.

Moreover, the electric signal of the photodetector 102j3 is supplied to the other terminals of the respective adder circuits 113a and 113c, via an amplifier circuit 114c. The electric signal of the photodetector 102j4 is supplied to the other terminals of the respective adder circuits 113b and 113d, via an amplifier circuit 114d.

An output signal of the adder circuit 113a is supplied to an inverting input terminal (-) of a differential amplifier circuit 104, and an output signal of the adder circuit 113b is supplied to a non-inverting input terminal (+) of the differential amplifier circuit 104. The differential amplifier circuit 104 generates a focus error signal by calculating a difference between the output signals of the respective adder circuits 113a and 113b, and then supplies the focus error signal to the focus controlling circuit 105. The focus controlling circuit 105 generates a focus controlling signal, which is to be supplied to the focus driving coil 102c, so that a level of the focus error signal becomes zero, and a focus servo control is carried out with respect to the objective lens 102a in response to the focus controlling signal.

The focus error signal which is supplied from the differential amplifier circuit 104 changes in accordance with an S-shaped characteristic (see Fig. 9), in a case where a focus-searching process (i.e., a process of counting the number of information recording layers) is carried out by sequentially moving, in the focus direction from an initial position, a position where a laser beam is converged by the objective lens 102a. Specifically, in a case where the focus-searching process is carried out, the focus error signal changes in accordance with the S-shaped characteristic (see Fig. 9) every time a position, where the laser beam is converged by the objective lens 102a, passes through each of the information recording layers (i.e., the first information recording layer A, the fourth information recording layer D, the third information recording layer C, and the second information recording layer B) which are shown in Fig. 8.

Note that the "initial position" indicates a position of a light beam which has not been converged by the objective lens 102a. In general, the initial position indicates a position which is (i) below the first information recording layer A of the optical information storage medium 400 and (ii) farthermost away, in the optical axis direction, from the optical information storage medium 400 (see Fig. 8).

For example, when a reproduction of the optical information storage medium 400 starts, the reproduction system 100 first controls the semiconductor laser oscillator 102f in the optical pickup 102 to emit reproducing light corresponding to a single-layer optical information storage medium.

Then, the reproduction system 100 moves the position, where the laser beam is converged by the objective lens 102a, upward in Fig. 3 to reach a driving upper limit position from the initial position. Then, the reproduction system 100 counts how many times the focus error signal exceeds a predetermined reference voltage +V0. This allows the reproduction system 100 to recognize the number of the information recording layers of the optical information storage medium 400.

Subsequently, the reproduction system 100 changes a reproducing light power, which is determined based on the number of the information recording layers of the optical information storage medium 400. Then, the reproduction system 100 moves the position, where the laser beam whose reproducing light power has been changed, downward in Fig. 3 to reach the initial position from the driving upper limit position. At the time, the reproduction system 100 changes gains of amplifiers, which are included in circuits such as the focus controlling circuit 105, so that the focus error signal detected from an information recording layer, which is first to be subjected to the focus-searching process, becomes an appropriate voltage.

In a case where the focus-searching process is carried out with respect to, for example, the second information recording layer B, the reproduction system 100 (i) counts how many times the focus error signal exceeds the predetermined reference voltage +V0 and (ii) activates the focus servo control when the focus error signal first becomes a zero level (a center level of the focus servo operation) after the focus error signal exceeds the predetermined reference voltage +V0 four times. This causes the focus-searching process, which is carried out by the reproduction system 100 with respect to the second information recording layer B, to be ended.

Note that Fig. 10 illustrates (i) a positional transition of the objective lens located when a focus-searching process is carried out with respect to the second information recording layer B by the reproduction system 100 and (ii) a focus error signal. (a) of Fig. 10 illustrates a positional transition of the objective lens and (b) of Fig. 10 illustrates a focus error signal.

In a case where a layer jump is carried out, for example, from the fourth information recording layer D to the second information recording layer B, the reproduction system 100 once deactivates the focus servo control, and then sequentially moves the position, where the laser beam is converged by the objective lens 102a, from the fourth information recording layer D to the second information recording layer B. The reproduction system 100 (i) counts how many times the focus error signal, which is supplied from the differential amplifier circuit 104, exceeds the predetermined reference voltage +V0 and (ii) activates the focus servo control when the focus error signal first becomes the zero level (the center level of the focus servo operation) after the focus error signal exceeds the predetermined reference voltage +V0 twice. This causes the layer jump process to be ended. Note that the layer jump process is not illustrated because the layer jump process is substantially identical to the focus-searching process.

Moreover, in a case where each focus-searching process is carried out, a phase difference detecting circuit 107 detects a phase difference between (i) a sum of output signals of the respective photodetectors 102j1 and 102j4 and (ii) a sum of output signals of the respective photodetectors 102j2 and 102j3. Then, the phase difference detecting circuit 107 supplies, as a tracking error signal, a detected result to the tracking controlling circuit 106.

The tracking controlling circuit 106 generates, in response to the tracking error signal, a tracking controlling signal to be supplied to the tracking driving coil 102b so that the objective lens 102a is subjected to a tracking servo control. In the reproduction system 100, the optical information storage medium 400 is reproduced while the tracking servo control is being carried out. Then, electric signals of the respective adder circuits 113c and 113d are added up by the adder circuit 113e, so as to be converted into a digital signal by a data reproducing circuit 110.

Note that the laser controlling circuit 103, the focus controlling circuit 105, the tracking controlling circuit 106, the motor controlling circuit 109, and the data reproducing circuit 110 of the reproduction system 100 are controlled by a controlling section 115. The controlling section 115 stores information regarding recording and reproduction of the optical information storage medium 400 which is loaded into the reproduction system 100. The controlling section 115 controls the circuits based on the information thus stored.

The following describes a checking section 116 of the reproduction system 100 in accordance with the present embodiment. The checking section 116 of the reproduction system 100 evaluates and sorts out the optical information storage medium 400 in view of a degree of occurrence of a "super ROM phenomenon".

Note that the reproduction system 100 of the present embodiment includes the checking section 116 which evaluates and sorts out the optical information storage medium 400. However, the present embodiment is not limited to this. Alternatively, the checking section 116 can be configured, for example, so as to be (i) provided separately from the reproduction system 100 and (ii) connected, as appropriate, with the reproduction system 100 as a checking device for the optical information storage medium 400. That is, the checking section 116 can be provided in the reproduction system 100 or can be provided separately from the reproduction system 100, provided that the checking section 116 achieves a configuration and an operation which are identical to those of the later described checking section 116.

Fig. 4 is a block diagram illustrating a configuration of the checking section 116. The checking section 116 includes a tracking instruction section 60, a rotation speed setting section 61, a laser power setting section 62, a check condition storing section 63, a differential signal obtaining section (detecting section) 64, a calculating section (detecting section) 65, a differential signal storing section 66, a judgment section 67, a fair quality criterion storing section 68, and a display section 69 (see Fig. 4).

The tracking instruction section 60 is connected with the controlling section 115 and gives an instruction to the controlling section 115 as to which process should be carried out with respect to the optical information storage medium 400 when a checking process is carried out for evaluating and sorting out the optical information storage medium 400. The tracking instruction section 60 carries out a desired process with respect to the optical information storage medium 400 via the instruction to the controlling section 115.

The rotation speed setting section 61 sets, with respect to the tracking instruction section 60, a rotating speed at which the optical information storage medium 400 should be rotated in the checking process carried out by the checking section 116.

The laser power setting section 62 sets, with respect to the tracking instruction section 60, a laser power, at which the optical information storage medium 400 should be irradiated in the checking process carried out by the checking section 116.

The tracking instruction section 60 informs, via the controlling section 115, predetermined circuits of the rotating speed and the laser power which are thus set.

The check condition storing section 63 stores a check condition which is prepared in advance. The check condition encompasses (i) the rotating speed which is set, with respect to the tracking instruction section 60, by the rotation speed setting section 61 and (ii) the laser power which is set, with respect to the tracking instruction section 60, by the laser power setting section 62. The check condition is entered, as appropriate, into the check condition storing section 63 by a user of the reproduction system 100.

A device, which is selected, as appropriate, from a magnetic disk device such as a hard drive unit and a known storage device such as a semiconductor memory, is used as the check condition storing section 63.

The differential signal obtaining section 64 is connected with (i) the photodetector 102j2 via the amplifier circuit 114b and (ii) the photodetector 102j3 via the amplifier circuit 114c. The differential signal obtaining section 64 obtains, from the respective photodetectors 102j2 and 102j3, output signals which are amplified by the respective amplifier circuits 114b and 114c.

The differential signal obtaining section 64 supplies, a differential signal of the two signals, i.e., the output signals of the respective photodetectors 102j2 and 102j3, to the calculating section 65 and the differential signal storing section 66.

Note that the differential signal obtaining section 64 can obtain output signals of the respective photodetectors 102j1 and 102j4, instead of the output signals of the respective photodetectors 102j2 and 102j3. In such a case, the differential signal obtaining section 64 is connected with (i) the photodetector 102j1 via the amplifier circuit 114a and (ii) the photodetector 102j4 via the amplifier circuit 114d. The differential signal obtaining section 64 obtains the output signals, which are amplified by the respective amplifier circuits 114a and 114d, from the respective photodetectors 102j1 and 102j4.

The differential signal obtaining section 64 thus obtains (i) the output signals of the respective photodetectors 102j2 and 102j3 which are juxtaposed to each other in the tangential direction of the optical information storage medium 400 or (ii) the output signals of the respective photodetectors 102j1 and 102j4 which are juxtaposed to each other in the tangential direction of the optical information storage medium 400. The differential signal obtaining section 64 can, of course, obtain a sum of the output signals of the respective photodetectors 102j1 and 102j2 and a sum of the output signals of the respective photodetectors 102j3 and 102j4.

When the differential signal, which is obtained by the differential signal obtaining section 64, is supplied to the calculating section 65, the calculating section 65 (i) obtains a differential signal stored in the differential signal storing section 66 and (ii) calculates a difference between the two differential signals. Then, the calculating section 65 supplies, to the judgment section 67, a calculated result of the difference between the differential signals.

The differential signal storing section 66 stores a differential signal which is to be obtained by the differential signal obtaining section 64. A device, which is selected, as appropriate, from a magnetic disk device such as a hard drive unit and a known storage device such as a semiconductor memory, is used as the differential signal storing section 66. Note that the check condition storing section 63 and the differential signal storing section 66 can be achieved by separate storage devices or can be achieved by dividing a storage region of a single storage device, provided that the check condition storing section 63 and the differential signal storing section 66 can store their respective pieces of necessary data.

The judgment section 67 carries out a judging process for evaluating and sorting out the optical information storage medium 400 based on a result calculated by the calculating section 65. In the judging process, the judgment section 67 obtains a fair quality criterion, as a judgment standard, from the fair quality criterion storing section 68. The judgment section 67 (i) compares the result calculated by the calculating section 65 with the fair quality criterion, and (ii) carries out the judging process based on a compared result.

The fair quality criterion storing section 68 stores a fair quality criterion which is prepared in advance. The fair quality criterion is entered, as appropriate, into the fair quality criterion storing section 68 by the user of the reproduction system 100.

A device, which is selected, as appropriate, from a magnetic disk device such as a hard drive unit and a known storage device such as a semiconductor memory, is used as the fair quality criterion storing section 68. Note that the check condition storing section 63, the differential signal storing section 66, and the fair quality criterion storing section 68 can be achieved by separate storage devices or can be achieved by dividing a storage region of a single storage device, provided that the check condition storing section 63, the differential signal storing section 66, and the fair quality criterion storing section 68 can store their respective pieces of necessary data.

The display section 69 displays a result judged by the judgment section 67. The display section 69 includes a display device such as a liquid crystal display panel and displays information, etc. which corresponds to the result judged by the judgment section 67.

The following describes an operation of the checking section 116. Fig. 1 is a flow chart for describing an operation of the checking section 116.

When an optical information storage medium 400 to be checked is loaded into the reproduction system 100, the rotation speed setting section 61 of the checking section 116 first (i) obtains a rotating speed of the optical information storage medium 400 stored in advance in the check condition storing section 63 and then (ii) sets, with respect to the tracking instruction section 60, the rotating speed (see Fig. 1).

Then, the tracking instruction section 60 instructs the controlling section 115 to rotate the optical information storage medium 400 at the rotating speed set by the rotation speed setting section 61. The controlling section 115 drives the disk driving motor 101 via the motor controlling circuit 109 so that the optical information storage medium 400 rotates at the rotating speed instructed by the tracking instruction section 60 (step S101).

Note that, for example, a rotating speed, at which an information signal is recorded onto the optical information storage medium 400, can be used as the rotating speed of the optical information storage medium 400.

The tracking instruction section 60 instructs the controlling section 115 to move the optical pickup 102 to a position which faces a predetermined measuring position such as a position in a recording area of the optical information storage medium 400, onto which recording area information is recorded by, for example, the user of the optical information storage medium 400. The controlling section 115 drives the feed motor 111 via the feed motor controlling circuit 108 so that the optical pickup 102 is moved to the position instructed by the tracking instruction section 60 (step S102).

The laser power setting section 62 obtains a first laser power, stored in advance in the check condition storing section 63, of the light laser beam with which the optical information storage medium 400 is irradiated. Then, the laser power setting section 62 sets, with respect to the tracking instruction section 60, the first laser power.

Then, the tracking instruction section 60 instructs the controlling section 115 to control a laser power of a laser beam emitted by the semiconductor laser oscillator 102f to be equal to the first laser power which is set by the laser power setting section 62. The controlling section 115 drives the semiconductor laser oscillator 102f via the laser controlling circuit 103 so that the laser power of the semiconductor laser oscillator 102f is fixed to the first laser power which is instructed by the tracking instruction section 60 (step S103).

Note that, for example, a laser power at which the optical information storage medium 400 is recorded can be used as the first laser power of the laser beam with which the optical information storage medium 400 is irradiated.

When the optical information storage medium 400 is irradiated with a laser beam, the tracking instruction section 60 instructs the controlling section 115 to carry out a focus-searching process with respect to a recording layer to be checked. The controlling section 115 carries out the focus-searching process with respect to the recording layer to be checked (step S104).

After the focus-searching process is carried out with respect to the recording layer to be checked, the tracking instruction section 60 instructs the controlling section 115 to carry out a tracking with respect to the recording layer to be checked. The controlling section 115 carries out the tracking with respect to an arbitrary track or a particular track on the recording layer to be checked (step S105).

When the tracking is carried out, the differential signal obtaining section 64 obtains (i) an output signal from the photodetector 102j2 via the amplifier circuit 114b and (ii) an output signal from the photodetector 102j3 via the amplifier circuit 114c. Then, the differential signal obtaining section 64 supplies a differential signal of the two signals, i.e., the output signals of the respective photodetectors 102j2 and 102j3, to the differential signal storing section 66. The differential signal storing section 66 stores the differential signal obtained by the differential signal obtaining section 64 (step S106).

Note that the differential signal detected in the step S106 is obtained by carrying out the tracking in the step S105. Hereinafter, the differential signal in the step S106 is referred to as "first differential signal".

Moreover, it is possible that another first differential signal is obtained by reversely rotating the optical information storage medium 400 in the step S106. Based on first differential signals, for example, by averaging the first differential signals, it is possible to reduce unevenness of the first differential signals, which unevenness is inherent in a pickup and is caused by temperature distribution in a rotating direction of the optical information storage medium 400, in a case where the optical information storage medium 400 is thus rotated in different directions. This causes an improvement in checking accuracy of the checking section 116.

The laser power setting section 62 obtains a second laser power of a laser beam with which the optical information storage medium 400 is irradiated, which second laser power is stored in advance in the check condition storing section 63. Then, the laser power setting section 62 sets, with respect to the tracking instruction section 60, the second laser power.

Then, the tracking instruction section 60 instructs the controlling section 115 to control a laser power of a laser beam emitted by the semiconductor laser oscillator 102f to be equal to the second laser power, which is set by the laser power setting section 62. The controlling section 115 drives the semiconductor laser oscillator 102f via the laser controlling circuit 103 so that the laser power of the semiconductor laser oscillator 102f is fixed to the second laser power, which is instructed by the tracking instruction section 60 (step S107).

Note that the second laser power of the laser beam with which the optical information storage medium 400 is irradiated (i) is a laser power which causes the "super ROM phenomenon" and (ii) is at least higher than the first laser power.

After the laser power of the semiconductor laser oscillator 102f is fixed to the second laser power in accordance with the instruction of the tracking instruction section 60, the differential signal obtaining section 64 obtains (i) an output signal of the photodetector 102j2 via the amplifier circuit 114b and (ii) an output signal of the photodetector 102j3 via the amplifier circuit 114c. Then, the differential signal obtaining section 64 supplies a differential signal of the two signals, i.e., the output signals of the respective photodetectors 102j2 and 102j3, to the calculating section 65 (step S108).

Note that the differential signals detected in the step S108 are obtained after the laser power is fixed to the second laser power. Hereinafter, the differential signal in the step S108 is referred to as "second differential signal".

In the step S108, another second differential signal can be obtained by reversely rotating the optical information storage medium 400, as with in the step S106. This makes it possible to bring about an effect similar to that in the step S106.

The checking section 116 carries out a quality judging process with respect to the optical information storage medium 400 with the use of the first and second differential signals thus obtained (step S109). Fig. 2 is a flow chart for describing how the checking section 116 operates in the step S109.

The calculating section 65 of the checking section 116 calculates a difference (hereinafter, sometimes simply referred to as "differential signal difference") between the first differential signal and the second differential signal (see Fig. 2). Then, the calculating section 65 supplies the differential signal difference, which is a calculated result, to the judgment section 67 (step S201).

When the differential signal difference is supplied from the calculating section 65, the judgment section 67 obtains a fair quality criterion which is stored in the fair quality criterion storing section 68. Then, the judgment section 67 compares an absolute value of the differential signal difference with the fair quality criterion, and carries out, based on a compared result, a quality judgment of the optical information storage medium 400 with regard to a recording layer to be checked (steps S203 through S205).

Note that the fair quality criterion can be obtained by, for example, multiplying a voltage change value of the tracking error signal, with which a defective reproduction can be caused, by a safety factor.

Specifically, in a case where the absolute value of the differential signal difference, which is the difference between the first differential signal and the second differential signal, is smaller than the fair quality criterion (YES in step S203), the judgment section 67 determines that the optical information storage medium 400 has a fair quality (step S204). On the other hand, in a case where the absolute value of the differential signal difference is equal to or more than the fair quality criterion (NO in step S203), the judgment section 67 determines that the optical information storage medium 400 is defective (step S205).

In this manner, the judgment section 67 carries out the judging process with respect to the optical information storage medium 400, and then the judgment section 67 supplies a judged result to the display section 69.

The display section 69 controls a display device, such as a liquid crystal display panel, to display information which is conformity with a result judged by the judgment section 67 (step S206).

According to the present embodiment, the rotating speed, the measuring position, the first and second laser powers, and the fair quality criterion of the optical information storage medium are not limited to those described above provided that the above factors are set, as appropriate, so as not to cause a problem such as a defective reproduction in a case where a user records information on an optical information storage medium with the use of an optical information storage medium drive unit which includes a commercially-available pickup having an average temperature distribution.

Moreover, the first and second differential signals are not necessarily obtained from the photodetectors 102j2 and 102j3, as described above. Therefore, the first and second differential signals can be obtained by (i) output signals of the respective photodetectors 102j1 and 102j4 or (ii) a sum of output signals from the photodetectors 102j1 and 102j2 and a sum of output signals from the photodetectors 102j3 and 102j4. Alternatively, the first and second differential signals can be obtained by output signals from respective front region and rear region, which extend in a scanning direction of a photodetector, in each of a small number of or a large number of divisions into which the photodetector is divided.

That is, it is merely necessary that (i) a difference is caused in the differential signals, which are obtained from the front region and rear region in the scanning direction of the photodetector, depending on a laser power of a laser beam with which an optical information storage medium, which is to be evaluated, is irradiated and (ii) the difference can be compared with a predetermined fair quality criterion.

Moreover, the predetermined laser powers do not need to be limited to the two types. Alternatively, (i) it is possible to prepare a single type of laser power and to use a voltage of a differential signal or (ii) it is possible to compare differences of differential signals, etc. in a certain range with each other with the use of several laser powers which fall within the certain range.

The following specifically describes a reason why the reproduction system 100 of the present embodiment can evaluate and sort out an optical information storage medium in view of a degree of occurrence of a "super ROM phenomenon".

First, the following describes how the super ROM phenomenon occurs during recording of an optical information storage medium.

In a case where temperature distribution in a beam spot generated by a pickup has a deviation on an inner periphery side or on an outer periphery side of the optical information storage medium, such a deviation cannot be controlled in manufacturing the pickup. This will cause an off-track recording as described below in a recordable optical information storage medium (R, RE), depending on a factor such as a material and/or a thickness of a recording film.

Fig. 5 shows a relation between an offset amount of and a jitter of each of two different mediums.

A medium 1 is a two-layer write-once recording medium (R) having an L0 layer, an intermediate layer, an L1 layer, and a light-transmitting layer which are provided on a substrate in this order. Note that (i) the L0 layer is made up of Ag alloy, ZnS-SiO₂, Cu alloy, Si, and ZnS-SiO₂ which are stacked in this order, (ii) the intermediate layer is made of ultraviolet curing resin, (iii) the L1 layer is made up of TiO₂, BiOₓ+GeO_{y}, and TiO₂ which are stacked in this order, and (iv) the light-transmitting layer is made of ultraviolet curing resin.

A medium 2 is a two-layer write-once recording medium (R) having an L0 layer, an intermediate layer, an L1 layer, and a light-transmitting layer which are provided on a substrate in this order. Note that (i) the L0 layer is made up of Ag alloy, a dielectric substance, Te-O-Pd, and a dielectric substance which are stacked in this order, (ii) the intermediate layer is made of ultraviolet curing resin, (iii) the L1 layer is made up of Ag alloy, a dielectric substance, Te-O-Pd, and a dielectric substance which are stacked in this order, and (iv) the light-transmitting layer is made of ultraviolet curing resin.

A signal for measuring jitter was high-speed-recorded (a quadruple speed recording onto a BD) onto each of the L0 layers of the respective mediums 1 and 2 with the use of a commercially available drive unit. Then, each of the mediums 1 and 2 was reproduced with respect to a center of a track in the radial direction onto which track the signal was recorded, while a center of a position which is irradiated with reproducing light was being shifted in a radial direction (i.e., while an offset amount in the radial direction was being changed with respect to the center of the track in the radial direction). Fig. 5 illustrates a measured result of dependence of the jitter on offset amount.

With regard to the medium 1, the jitter reached its bottom when the offset amount was not zero (see Fig. 5). That is, the recording signal was recorded onto a position deviated from the center of the track. This phenomenon occurred only in the medium 1 while a degree of the phenomenon differs from drive unit to drive unit.

It was found out, through analysis, that the phenomenon seemed to be caused by the "super ROM phenomenon".

As early mentioned in the "Background Art", the "super ROM phenomenon" is a technique which enables a reproduction of a pit which is not more than a resolution limit (see Patent Literature 4 and Non Patent Literature 1).

Almost all materials cause the "super ROM phenomenon" in varying degrees. As a reproducing laser power becomes higher, it becomes possible to reproduce a pit which (i) is recorded at a single frequency equal to or smaller than the resolution limit and (ii) has a length equal to or shorter than the resolution limit. Note that the "super ROM phenomenon" is caused by heat. Moreover, Si and Ge are materials which most cause the "super ROM phenomenon", whereas Au is one of materials which least cause the "super ROM phenomenon".

In order to confirm that the "super ROM phenomenon" and the off-tracking phenomenon correlate with each other, (i) an inner periphery side signal and an outer periphery side signal of a light-receiving section, which was divided into two regions in a radial direction of each of mediums 3 and 4, were measured for each reproducing power during off-tracking, and then (ii) measured results were compared with each other. Note that (i) the medium 3 was prepared by stacking Si having a thickness of 50 nm and a light-transmitting layer having a thickness of 100 µm on a substrate in this order, and the medium 4 was prepared by stacking Au having a thickness of 50 nm and a light-transmitting layer having a thickness of 100 µm on a substrate in this order. (a) of Fig. 6 shows the results measured for the medium 4, and (b) of Fig. 6 shows the results measured for the medium 3.

In a case of a low reproducing laser power (0.3 mW), the medium 4 had a phase difference P1 between an inner periphery side signal S1 and an outer periphery side signal S2. In a case of a high reproducing laser power (4.0 mW), the medium 4 had a phase difference P2 between an inner periphery side signal S1 and an outer periphery side signal S2. It should be noted that the phase difference P1 is substantially equal to the phase difference P2 (see (a) of Fig. 6).

On the other hand, in a case of a low reproducing laser power (0.3 mW), the medium 3 had a phase difference P3 between an inner periphery side signal S4 and an outer periphery side signal S3. In a case of a high reproducing laser power (4.0 mW), the medium 3 had a phase difference P4 between an inner periphery side signal S4 and an outer periphery side signal S3. It should be noted that the phase difference P3 is apparently larger than the phase difference P4 (see (b) of Fig. 6).

Namely, it is possible to confirm in the case of the high reproducing laser power that the phase between the inner periphery side signal S4 and the outer periphery side signal S3 is shifted only in the medium 3 in which the "super ROM phenomenon" easily occurs.

This shows that push-pull signals, which are obtained in respective cases of low and high reproducing laser powers and each of which is a differential signal of the inner periphery side signal S4 and the outer periphery side signal S3, are different from each other. Note that the push-pull signal is a signal for controlling the irradiation of a laser beam so that its laser spot is converged onto a center of a track. This therefore shows that centers of laser spots, which are obtained in respective cases of low and high reproducing laser powers, are different from each other.

The following will show a cause of the phenomenon. Namely, since the "super ROM phenomenon" is caused by heat, (i) a temperature difference occurs between a first region from which an inner periphery side signal is obtained and a second region from which an outer periphery side signal is obtained, in a laser spot of a laser beam which is emitted by the pickup toward a medium and (ii) such a temperature difference becomes more noticeably as the reproducing laser power increases. This will cause a degree of occurrence of the "super ROM phenomenon" on the inner periphery side to be different from that on the outer periphery side.

The temperature difference is considered to occur due to production tolerance in manufacturing of pickups, and it is therefore difficult to control the temperature difference at this moment.

Note that a high laser power is required in a high-speed recording. It is therefore considered that a phenomenon similar to the high reproducing laser power will occur.

On the other hand, it is the medium 1 of the mediums 1 and 2 that has an off-track recording. This is because the medium 1 has the Si film, which is known as a material causing the "super ROM phenomenon".

This shows that centers of the laser spots, which are obtained in respective cases of low and high reproducing laser powers, are different from each other only in the mediums 1 and 3, which contain Si which easily causes the "super ROM phenomenon". It appears that a cause, why an off-track recording occurs during a high-speed recording of an R-medium, is highly likely to reside in the "super ROM phenomenon".

Note that the "super ROM phenomenon" can occur not only in the R-medium but also in a general recordable medium such as RW-medium or RE-medium in varying degrees. This is because almost all materials can have the "super ROM phenomenon".

The following can be expected, provided that the off-track recording is caused by the "super ROM phenomenon".

Specifically, it is possible to expect that (i) in a case of a medium which is used in a higher-speed recording than a quadruple speed recording for a BD, a recording power becomes higher and higher and (ii) an off-track recording occurs more remarkably in a medium in which the "super ROM phenomenon" occurs easily.

This can be expected to be further remarkable in a case of a drive unit, which includes a pickup which causes a remarkable temperature difference in a laser spot, is used. As such, in order to produce a medium which can be used in a higher-speed recording, it has been necessary to (i) measure a medium in view of a degree of occurrence of the "super ROM phenomenon" and then (ii) sort out a medium which suppresses its degree of occurrence of the "super ROM phenomenon" within a certain standard.

However, a "super ROM phenomenon", which occurs on each of an inner periphery side and an outer periphery side of a recording track on a medium, depends on temperature distribution inherent in pickup. Therefore, a measured value differs from pickup to pickup. Moreover, according to a method for measuring a signal while a laser spot is traversing a track without carrying out a tracking, as with the measurement with respect to the mediums 3 and 4, the measurement cannot be carried out with a certain standard. This is because a speed at which the laser spot traverses the track differs depending on a factor such as a degree of eccentricity of a medium.

In view of the circumstances, according to the present embodiment, a direction, in which the light-receiving section is divided, is changed to the track direction. This makes it possible to generate an arbitrary temperature deviation by rotating a disk at an arbitrary rotating speed.

Moreover, in general, there are wobbles on respective sidewalls of a track, and this makes it possible to generate a state similar to the traversing of the track. Therefore, it is possible to measure a degree of occurrence of the "super ROM phenomenon" with a certain standard.

In order to verify this, the measured results of the medium 1 and the medium 2 were compared with each other with the use of ODU-1000 (manufactured by Pulstec Industrial, Co., Ltd.), which was a normal evaluating device for evaluating a Blu-lay Disc (BD) having an optical system in which a wavelength was 405 nm and an NA was 0.85.

Note that a predetermined measuring position was R = 50 mm, a rotating speed of each of the mediums 1 and 2 was 940 rpm (equivalent of linear velocity of 4.92 m/s), a measured layer was the L0 layer in each of the mediums 1 and 2, the first laser power was 0.7 mW, which was a laser power for reproducing a two-layer BD-R, and the second laser power was 3mW, 5mW, 7mW, 10mW, and 12mW. Fig. 7 illustrates measured results.

As is clear from Fig. 7, a voltage difference between the differential signals in the medium 2 did not change, except for an error, in the range of the irradiation laser powers between 3 mW and 12 mW. Whereas, it was seen that a voltage difference between the differential signals in the medium 1 began to change at the laser power of approximately 10 mW, and the voltage difference was apparently changed at the laser power of 12 mW.

That is, the "super ROM phenomenon" apparently occurred at the irradiation laser power of 12 mW only in the medium 1.

Moreover, the medium 1 of Fig. 5 was also recorded at the recording power of 12 mW, and it was confirmed, with the use of the checking method, to check an off-track recording occurred when a recording was carried out.

Moreover, with the use of the checking method, it was confirmed that similar results was obtained even by the use of a different evaluating device.

As early described, in the case of the medium 1 shown in Fig. 5, the recording signal was recorded onto a position which was deviated from the center of the track, and the offset amount of the recording signal was 0.003 µm when the medium 1 was recorded at the recording power (second laser power) of 12 mW (see Fig. 13). Moreover, when the offset amount was 0.013 µm or more, the jitter exceeded 7%. This increases the possibility of disturbing a reproduction carried out by a drive unit.

It is known that the "super ROM phenomenon", which is considered to cause the off-track recording, can reproduce a pit, which is smaller than an optical resolution limit, by increasing an irradiating laser power, and consequently a C/N (one of indexes of a signal quality) becomes larger in proportion to the increase in the irradiating laser power.

It is therefore expected that the voltage difference between the differential signals at respective of the low laser power (first laser power) and the high laser power (second laser power) (see Fig. 7) becomes larger in proportion to the increase in the second laser power (see a part E indicated in Fig. 14).

It is possible to expect as follows, assuming that the degree of the voltage difference between the differential signals is in proportion to the offset amount. Specifically, the offset amount becomes 0.013 µm or more (as described above) when the second laser power is 21 mW or more, in view of the fact that the offset amount is 0.003 µm when the medium 1 is recorded at the recording power of 12 mW. In this case, a reproduction of the medium 1 can be disturbed at least with the use of the commercially-available drive unit which is used in this verification.

Conversely, the offset amount will never become 0.013 µm or more and the jitter will never exceed 7%, even when the recording power is 21 mW or more, provided that the offset amount is substantially zero when the recording poser is 12 mW, i.e., provided that a medium is judged to have a fair quality, when the recording power is 12mW, by the checking method of the present embodiment. This reduces the possibility of disturbing the reproduction carried out by the drive unit.

Note that the measured layer in the medium 1 has grooves which are provided at a track pitch of 0.32 µm in each of Figs. 5, 7, 13, and 14. Moreover, Figs. 5, 7, 13, and 14 shows the results obtained in a case where the measured layer is irradiated with a laser beam which has a wavelength of 405 nm, via an objective lens having a numeric aperture of 0.85.

Note that, it is considered that an effect similar to that above described can be brought about when the measured layer is irradiated with a laser beam, which has a wavelength of 400 nm to 410 nm, via an objective lens having a numeric aperture of 0.84 to 0.86, provided that the grooves of the medium 1 are provided at a track pitch of 0.30 µm to 0.34 µm.

### (Embodiment 2)

The following describes Embodiment 2 of the present invention. Fig. 15 is a block diagram illustrating a configuration of a recording/reproducing system (recording device) for an optical information storage medium in accordance with Embodiment 2 of the present invention. A recording/reproducing system 200 of the present embodiment is a system for recording/reproducing a general multilayer optical information storage medium. Further, the reproduction system 200 compensates an off-track recording caused by a degree of occurrence of a "super ROM phenomenon" in the multilayer optical information storage medium so as to prevent a defective reproduction of the multilayer optical information storage medium.

Note that the recording/reproducing system 200 shown in Fig. 15 has substantially the same configuration as the reproduction system 100 shown in Fig. 3, except that the checking section 116 is substituted with an offset amount determining section (OS amount determination section) 201. The following describes the substituted configuration, and descriptions of the other configurations, which are identical to those in Embodiment 1, are omitted.

According to the recording/reproducing system 200 of the present embodiment, the offset amount determining section 201 compensates an off-track recording caused by a degree of occurrence of a "super ROM phenomenon" in an optical information storage medium 400 so as to prevent a defective reproduction of the multilayer optical information storage medium.

Note that the recording/reproducing system 200 includes the offset amount determining section 201. However, the present embodiment is not limited to this. Alternatively, the offset amount determining section 201 can be configured, for example, so as to be (i) provided separately from the recording/reproducing system 200 and (ii) connected, as appropriate, with the recording/ reproducing system 200 as an offset amount determining device for the optical information storage medium 400. That is, the offset amount determining section 201 can be provided in the recording/ reproducing system 200 or can be provided separately from the recording/reproducing system 200, provided that the offset amount determining section 201 achieves a configuration and an operation which are identical to those of the later described offset amount determining section 201.

Fig. 16 is a block diagram illustrating a configuration of the offset amount determining section 201. The offset amount determining section 201 includes a recording/reproducing instruction section 70, a rotation speed setting section 71, a laser power setting section 72, a recording/reproducing condition storing section 73, a differential signal obtaining section (detecting section) 74, a calculating section (detecting section) 75, an offset amount determining condition storing section (OS amount determining condition storing section) 76, an offset amount obtaining section (OS amount obtaining section) 77, and a determination section 78 (see Fig. 16).

The recording/reproducing instruction section 70 is connected with a controlling section 115 and gives an instruction to the controlling section 115 as to which process should be carried out with respect to the optical information storage medium 400 when an offset amount determining process is carried out for determining an offset amount which is required for compensating an off-track recording in the optical information storage medium 400. The recording/reproducing instruction section 70 carries out a desired process with respect to the optical information storage medium 400 via the instruction to the controlling section 115.

The rotation speed setting section 71 sets, with respect to the recording/reproducing instruction section 70, a rotating speed at which the optical information storage medium 400 should be rotated in the offset amount determining process carried out by the offset amount determining section 201.

The laser power setting section 72 sets, with respect to the recording/reproducing instruction section 70, a laser power at which the optical information storage medium 400 should be irradiated in the offset amount determining process carried out by the offset amount determining section 201.

The recording/ reproducing instruction section 70 informs, via the controlling section 115, predetermined circuits of the rotating speed and the laser power which are thus set.

The recording/reproducing condition storing section 73 stores a recording/ reproducing condition which is prepared in advance. The recording/ reproducing condition encompasses (i) the rotating speed which is set, with respect to the recording/ reproducing instruction section 70, by the rotation speed setting section 71 and (ii) the laser power which is set, with respect to the recording/ reproducing instruction section 70, by the laser power setting section 72. The recording/ reproducing condition can be (i) entered, as a known one, in advance in the recording/reproducing condition storing section 73, (ii) stored as information obtained by separately reproducing information, which is stored in advance in a predetermined location (such as a read-in area) of the optical information storage medium, or (iii) stored as information obtained by separately carrying out a test writing.

A device, which is selected, as appropriate, from a magnetic disk device such as a hard drive unit and a known storage device such as a semiconductor memory, is used as the recording/reproducing condition storing section 73.

The differential signal obtaining section 74 is connected with (i) a photodetector 102j2 via an amplifier circuit 114b and (ii) a photodetector 102j3 via an amplifier circuit 114c. The differential signal obtaining section 64 obtains, from the respective photodetectors 102j2 and 102j3, output signals which are amplified by the respective amplifier circuits 114b and 114c.

The differential signal obtaining section 74 supplies a differential signal of the two signals, i.e., the output signals of the respective photodetectors 102j2 and 102j3, to the calculating section 75 and the offset amount determining condition storing section 76.

Note that the differential signal obtaining section 74 can obtain output signals of the respective photodetectors 102j1 and 102j4, instead of the output signals of the respective photodetectors 102j2 and 102j3. In such a case, the differential signal obtaining section 74 is connected with (i) the photodetector 102j1 via the amplifier circuit 114a and (ii) the photodetector 102j4 via the amplifier circuit 114d. The differential signal obtaining section 74 obtains the output signals, which are amplified by the respective amplifier circuits 114a and 114d, from the respective photodetectors 102j1 and 102j4.

The differential signal obtaining section 74 thus obtains (i) the output signals of the respective photodetectors 102j2 and 102j3 which are juxtaposed to each other in the tangential direction of the optical information storage medium 400 or (ii) the output signals of the respective photodetectors 102j1 and 102j4 which are juxtaposed to each other in the tangential direction of the optical information storage medium 400. The differential signal obtaining section 74 can, of course, obtain a sum of the output signals of the respective photodetectors 102j1 and 102j2 and a sum of the output signals of the respective photodetectors 102j3 and 102j4.

When the differential signal, which is obtained by the differential signal obtaining section 74, is supplied to the calculating section 75, the calculating section 75 (i) obtains a differential signal stored in the offset amount determining condition storing section 76 and (ii) calculates a difference between the two differential signals. Then, the calculating section 75 stores a calculated result of the difference between the differential signals in the offset amount determining condition storing section 76.

The offset amount determining condition storing section 76 stores a differential signal which is to be obtained by the differential signal obtaining section 74. A device selected, as appropriate, from a magnetic disk device such as a hard drive unit and a known storage device such as a semiconductor memory is used as the offset amount determining condition storing section 76. Note that the recording/ reproducing condition storing section 73 and the offset amount determining condition storing section 76 can be achieved by separate storage devices or can be achieved by dividing a storage region of a single storage device, provided that the recording/ reproducing condition storing section 73 and the offset amount determining condition storing section 76 can store their respective pieces of necessary data.

The offset amount obtaining section 77 is connected with a tracking controlling circuit 106 so as to obtain an offset amount with which the tracking controlling circuit 106 controls a position of an objective lens 102a in the tracking direction. As early described, the tracking controlling circuit 106 generates and supplies a tracking controlling signal to the tracking driving coil 102b so as to carry out a tracking servo control with respect to the objective lens 102a. The offset amount is equal to an amount by which the objective lens 102a is moved, from the tracking state, in the radial direction of the optical information storage medium 400.

Moreover, the offset amount obtaining section 77 stores, in the offset amount determining condition storing section 76, the offset amount which has been obtained from the tracking controlling circuit 106.

The determination section 78 obtains the differential signal (herein after, referred to as "differential signal A") and the offset amount (hereinafter, referred to as "offset amount X"), which is obtained during the recording of the optical information storage medium 400, from the offset amount determining condition storing section 76. When the differential signal (herein after, referred to as "differential signal B"), which is obtained during the reproducing of the optical information storage medium 400, is supplied to the determination section 78 from the calculating section 75, the determination section 78 determines an offset amount, which is used during the recording of the optical information storage medium 400, based on the differential signal A, the offset amount X, and the differential signal B.

After the determination section 78 determines the offset amount, the determination section 78 supplies the offset amount to the tracking controlling circuit 106.

The following describes an operation of the offset amount determining section 201. Figs. 17, 18, and 19 are flow charts for describing an operation of the offset amount determining section 201.

When an optical information storage medium 400 for determining an offset amount is loaded into the recording/ reproducing system 200, the rotation speed setting section 71 of the offset amount determining section 201 first (i) obtains a rotating speed of the optical information storage medium 400 stored in advance in the recording/reproducing condition storing section 73 and then (ii) sets, with respect to the recording/reproducing instruction section 70, the rotating speed (see Fig. 17).

Here, it is assumed that the optical information storage medium 400 for determining an offset amount is a recording medium which is known, in advance, to cause the off-track recording.

Note that the optical information storage medium 400 for determining an offset amount, which is known in advance to cause the off-track recording, can be obtained by a device manufacturer which produces the recording/reproducing system 200. Whereas, it is difficult for a user, who purchases and uses a recording/reproducing system 200, to obtain such an optical information storage medium 400. Therefore, the device manufacturer ordinarily carries out the operation of the offset amount determining section 201 (i.e., the operation illustrated in the flow charts of Figs. 17 and 18) with the use of the optical information storage medium 400 for determining an offset.

Then, the recording/reproducing instruction section 70 instructs the controlling section 115 to rotate the optical information storage medium 400 at the rotating speed set by the rotation speed setting section 71. The controlling section 115 drives a disk driving motor 101 via a motor controlling circuit 109 so that the optical information storage medium 400 rotates at the rotating speed instructed by the recording/reproducing instruction section 70 (step S301).

Note that a rotating speed, at which an information signal is recorded onto the optical information storage medium 400, can be used as the rotating speed of the optical information storage medium 400.

The recording/reproducing instruction section 70 instructions the controlling section 115 to move an optical pickup 102 to a position which faces a predetermined recording position of the optical information storage medium 400. The controlling section 115 drives a feed motor 111 via a feed motor controlling circuit 108 so that the optical pickup 102 is moved to the position instructed by the recording/reproducing instruction section 70 (step S302).

The laser power setting section 72 obtains a laser power for recording, stored in advance in the recording/reproducing condition storing section 73, of a laser beam with which the optical information storage medium 400 is irradiated. Then, the laser power setting section 72 sets, with respect to the recording/ reproducing instruction section 70, the laser power for recording.

Then, the recording/ reproducing instruction section 70 instructs the controlling section 115 to control a laser power of a laser beam emitted by a semiconductor laser oscillator 102f to be equal to the laser power for recording which is set by the laser power setting section 72. The controlling section 115 drives the semiconductor laser oscillator 102f via a laser controlling circuit 103 so that the laser power of the semiconductor laser oscillator 102f is fixed to the laser power for recording which is instructed by the recording/reproducing instruction section 70 (step S303).

Note that, in the step S303, the laser power for recording is obtained as a laser power of a laser beam with which the optical information storage medium 400 is irradiated. However, the present embodiment is not limited to this. For example, after obtaining a laser power of a laser beam with which the optical information storage medium 400 is irradiated during a reproduction operation, later described steps S304 and S305 can be carried out with the use of the laser power thus obtained. In this case, the recording/ reproducing instruction section 70 is to newly instruct, in a later described step S306, the controlling section 115 to control a laser power of a laser beam emitted by the semiconductor laser oscillator 102f to be equal to the laser power for recording which is set by the laser power setting section 72.

Note that, in a case where information is actually recorded onto the optical information storage medium 400, the optical information storage medium 400 is irradiated with a laser beam so that the laser beam has a plurality of laser powers which are combined to be a pulse train. According to the present embodiment, therefore, the laser power for recording indicates the highest laser power out of the plurality of laser powers thus combined. Alternatively, the laser power for recording can be (i) a laser power which is uniformized so that the plurality of laser powers have identical total amounts of energy or (ii) a laser power obtained by averaging the plurality of laser powers.

When the optical information storage medium 400 is irradiated with a laser beam, the recording/ reproducing instruction section 70 instructs the controlling section 115 to carry out a focus-searching process with respect to a recording layer to be recorded. The controlling section 115 carries out the focus-searching process with respect to the recording layer to be recorded (step S304).

After the focus-searching process is carried out with respect to the recording layer to be recorded, the recording/reproducing instruction section 70 instructs the controlling section 115 to carry out a tracking with respect to the recording layer to be recorded. The controlling section 115 carries out the tracking with respect to an arbitrary track or a particular track on the recording layer to be recorded (step S305).

The differential signal obtaining section 74 obtains (i) an output signal from the photodetector 102j2 via the amplifier circuit 114b and (ii) an output signal from the photodetector 102j3 via the amplifier circuit 114c. Then, the differential signal obtaining section 74 supplies a differential signal of the two signals, i.e., the output signals of the respective photodetectors 102j2 and 102j3, to the offset amount determining condition storing section 76. The offset amount determining condition storing section 76 stores the differential signal obtained by the differential signal obtaining section 74 (step S306).

Moreover, it is possible that another differential signal is obtained by reversely rotating the optical information storage medium 400 in the step S306. Based on differential signals, for example, by averaging the differential signals, it is possible to reduce unevenness of the differential signals, which unevenness is inherent in a pickup and is caused by temperature distribution in a rotating direction of the optical information storage medium 400, in a case where the optical information storage medium 400 is thus rotated in different directions.

The recording/reproducing instruction section 70 instructs the controlling section 115 to record predetermined information onto the optical information storage medium 400 (step S307). The predetermined information is, as later described, to be used to obtain an offset amount which is used during recording of the optical information storage medium 400.

When the recording of the optical information storage medium 400 is completed, the rotation speed setting section 71 obtains a rotating speed of the optical information storage medium 400 which rotating speed is stored in advance in the recording/ reproducing condition storing section 73, and then sets the rotating speed with respect to the recording/reproducing instruction section 70. The recording/reproducing instruction section 70 instructs the controlling section 115 to control the optical information storage medium 400 to be rotated at the rotating speed which is set by the rotation speed setting section 71. The controlling section 115 drives the disk driving motor 101 via a motor controlling circuit 109 so as to rotate the optical information storage medium 400 at the rotating speed instructed by the recording/reproducing instruction section 70 (step S308).

Used as the rotating speed of the optical information storage medium 400 is a rotating speed at which an information signal, which has been recorded onto the optical information storage medium 400, is reproduced.

The recording/reproducing instruction section 70 instructs the controlling section 115 so that the optical pickup 102 is moved to a position facing a predetermined recording position on the optical information storage medium 400. The controlling section 115 drives the feed motor 111 via the feed motor controlling circuit 108 so that the optical pickup 102 is moved to the position instructed by the recording/reproducing instruction section 70 (step S309).

The laser power setting section 72 obtains a reproducing laser power of a laser beam with which the optical information storage medium 400 is irradiated, which reproducing laser power is stored in advance in the recording/reproducing condition storing section 73. Then, the laser power setting section 72 sets, with respect to the recording/reproducing instruction section 70, the reproducing laser power.

Then, the recording/reproducing instruction section 70 instructs the controlling section 115 to control a laser power of a laser beam emitted by the semiconductor laser oscillator 102f to be equal to the reproducing laser power which is set by the laser power setting section 72. The controlling section 115 drives the semiconductor laser oscillator 102f via the laser controlling circuit 103 so that the laser power of the semiconductor laser oscillator 102f is fixed to the reproducing laser power, which is instructed by the recording/reproducing instruction section 70 (step S310).

When the optical information storage medium 400 is irradiated with the laser beam, the recording/ reproducing instruction section 70 instructs the controlling section 115 to carry out a focus-searching process with respect to a recording layer to be recorded. The controlling section 115 carries out the focus-searching process with respect to the recording layer to be recorded (step S311).

After the focus-searching process is carried out with respect to the recording layer to be recorded, the recording/ reproducing instruction section 70 instructs the controlling section 115 to carry out a tracking with respect to the recording layer to be recorded. The controlling section 115 carries out the tracking with respect to an arbitrary track or a particular track on the recording layer to be recorded (step S312).

The recording/reproducing instruction section 70 instructs the controlling section 115 to reproduce the predetermined information, which has been recorded onto the optical information storage medium 400 in the step S307 (step S313).

In the step S313, the recording/reproducing instruction section 70 carries out the reproduction with respect to the optical information storage medium 400, while changing the offset amount in the radial direction of the optical information storage medium 400, and then a signal quality evaluating section (not illustrated) evaluates reproducing signal qualities (such as bER, signal amplitude, and asymmetry) for the respective offset amounts thus changed. Then, an offset amount, which causes a best reproducing signal quality (such as bER, signal amplitude, and asymmetry), is determined. This allows the offset amount obtaining section 77 to obtain the offset amount which is used during the recording of the optical information storage medium 400. Then, the offset amount obtaining section 77 stores, in the offset amount determining condition storing section 76, the offset amount thus obtained.

The operation of the offset amount determining section 201, which operation is carried out by the device manufacturer, is thus completed.

The following describes such an operation of the offset amount determining section 201 (i.e., the operation illustrated by the flow chart of Fig. 19) which is described early and which is carried out by a user who purchases and uses the recording/reproducing system 200.

When a normal optical information storage medium 400 is loaded into the recording/reproducing system 200 by the user, the rotation speed setting section 71 of the offset amount determining section 201 (i) obtains a rotating speed of the optical information storage medium 400 stored in advance in the recording/reproducing condition storing section 73 and then (ii) sets, with respect to the recording/reproducing instruction section 70, the rotating speed.

Here, it is assumed that the normal optical information storage medium 400 is a recording medium which is not known whether to cause the off-track recording.

Then, the recording/reproducing instruction section 70 instructs the controlling section 115 to rotate the optical information storage medium 400 at the rotating speed set by the rotation speed setting section 71. The controlling section 115 drives the disk driving motor 101 via the motor controlling circuit 109 so that the optical information storage medium 400 rotates at the rotating speed instructed by the recording/reproducing instruction section 70 (step S401).

Note that a rotating speed, at which an information signal is recorded onto the optical information storage medium 400, can be used as the rotating speed of the optical information storage medium 400.

The recording/reproducing instruction section 70 instructs the controlling section 115 to move an optical pickup 102 to a position which faces a predetermined recording position of the optical information storage medium 400. The controlling section 115 drives the feed motor 111 via the feed motor controlling circuit 108 so that the optical pickup 102 is moved to the position instructed by the recording/ reproducing instruction section 70 (step S402).

The laser power setting section 72 obtains a laser power for recording, stored in advance in the recording/ reproducing condition storing section 73, of the laser beam with which the optical information storage medium 400 is irradiated. Then, the laser power setting section 72 sets, with respect to the recording/reproducing instruction section 70, the laser power for recording.

Then, the recording/reproducing instruction section 70 instructs the controlling section 115 to control a laser power of a laser beam emitted by a semiconductor laser oscillator 102f to be equal to the laser power for recording which is set by the laser power setting section 72. The controlling section 115 drives the semiconductor laser oscillator 102f via a laser controlling circuit 103 so that the laser power of the semiconductor laser oscillator 102f is fixed to the laser power for recording which is instructed by the recording/reproducing instruction section 70 (step S403).

Note that, in the step S403, the laser power for recording is obtained as a laser power of a laser beam with which the optical information storage medium 400 is irradiated. However, the present embodiment is not limited to this. For example, after obtaining a laser power of a laser beam with which the optical information storage medium 400 is irradiated during a reproduction operation, later described steps S404 and S405 can be carried out with the use of the laser power thus obtained. In this case, the recording/reproducing instruction section 70 is to newly instruct, in a later described step S406, the controlling section 115 to control a laser power of a laser beam emitted by the semiconductor laser oscillator 102f to be equal to the laser power for recording which is set by the laser power setting section 72.

Note that, in a case where information is actually recorded onto the optical information storage medium 400, the optical information storage medium 400 is irradiated with a laser beam so that the laser beam has a plurality of laser powers which are combined to be a pulse train. According to the present embodiment, therefore, the laser power for recording indicates the highest laser power out of the plurality of laser powers thus combined. Alternatively, the laser power for recording can be (i) a laser power which is uniformized so that the plurality of laser powers have identical total amounts of energy or (ii) a laser power obtained by averaging the plurality of laser powers.

When the optical information storage medium 400 is irradiated with a laser beam, the recording/reproducing instruction section 70 instructs the controlling section 115 to carry out a focus-searching process with respect to a recording layer to be recorded. The controlling section 115 carries out the focus-searching process with respect to the recording layer to be recorded (step S404).

After the focus-searching process is carried out with respect to the recording layer to be recorded, the recording/reproducing instruction section 70 instructs the controlling section 115 to carry out a tracking with respect to the recording layer to be recorded. The controlling section 115 carries out the tracking with respect to an arbitrary track or a particular track on the recording layer to be recorded (step S405).

The differential signal obtaining section 74 obtains (i) an output signal from the photodetector 102j2 via the amplifier circuit 114b and (ii) an output signal from the photodetector 102j3 via the amplifier circuit 114c. Then, the differential signal obtaining section 74 supplies a differential signal of the two signals, i.e., the output signals of the respective photodetectors 102j2 and 102j3, to the offset amount determining condition storing section 76. The offset amount determining condition storing section 76 stores the differential signal obtained from the differential signal obtaining section 74 (step S406).

In the step S406, another differential signal can be obtained by reversely rotating the optical information storage medium 400, as with in the step S306. This makes it possible to bring about an effect similar to that in the step S306.

The determination section 78 obtains, from the offset amount determining condition storing section 76, (i) the differential signal which has been detected in the step S306 and (ii) the differential signal which has been detected in the step S406. The differential signal, which has been detected in the step S306, is a differential signal (hereinafter, referred to as "offset amount determining differential signal") which is obtained during the recording of the optical information storage medium 400 for determining an offset amount. On the other hand, the differential signal, which has been detected in the step S406, is a differential signal (hereinafter, referred to as "normal differential signal") which is obtained during the recording of a normal optical information storage medium 400.

The determination section 78 compares the offset amount determining differential signal with the normal differential signal, and then calculates a magnification ratio of the normal differential signal to the offset amount determining differential signal (step S407).

Then, the determination section 78 obtains the offset amount, which has been obtained in the step S313, from the offset amount determining condition storing section 76. The offset amount, which has been obtained in the step S313, is an offset amount which is obtained during the recording of the optical information storage medium 400 for determining an offset amount.

The determination section 78 multiplies the offset amount by the magnification ratio, which has been calculated in the step S407, and determines the offset amount thus multiplied to be an offset amount which is used during the recording of the normal optical information storage medium 400. The determination section 78 supplies the offset amount thus determined to the recording/reproducing instruction section 70 (step S408).

The recording/reproducing instruction section 70 instructs the controlling section 115 to carry out a recording with respect to the optical information storage medium 400 with the use of the offset amount determined by the determination section 78 (step S409).

Note that a difference between (i) a differential signal obtained when irradiating the optical information storage medium 400 with a laser beam having a laser power for recording and (ii) a differential signal obtained by an irradiation with a lower laser power can be used as each of the differential signals which are obtained in the step S306 or S406.

The present invention is not limited to the embodiments, but can be altered by a skilled person in the art within the scope of the claims. An embodiment derived from a proper combination of technical means disclosed in respective different embodiments is also encompassed in the technical scope of the present invention.

Lastly, (i) the tracking instruction section 60, the rotation speed setting section 61, the laser power setting section 62, the differential signal obtaining section 64, the calculating section 65, and the judgment section 67 of the checking section 116 and (ii) the recording/reproducing instruction section 70, the rotation speed setting section 71, the laser power setting section 72, the differential signal obtaining section 74, the calculating section 75, the offset amount obtaining section 77, and the determination section 78 of the offset amount determining section 201, can be configured by hardware logic or realized by software with the use of a CPU as follows.

That is, the tracking instruction section 60, the rotation speed setting section 61, the laser power setting section 62, the differential signal obtaining section 64, the calculating section 65, the judgment section 67, the recording/reproducing instruction section 70, the rotation speed setting section 71, the laser power setting section 72, the differential signal obtaining section 74, the calculating section 75, the offset amount obtaining section 77, and the determination section 78 are configured by a CPU (central processing unit), a ROM (read only memory), a RAM (random access memory), and a memory device (memory medium) such as a memory. The CPU executes instructions of control programs for realizing the functions of the respective above sections. In the ROM, the programs are stored. Into the RAM the programs are loaded. In the memory device, the programs and various data are stored. The objective of the present invention can also be achieved, by (i) supplying a recording medium, in which program codes (executable programs, intermediate code programs, source programs) of programs for controlling the tracking instruction section 60, the rotation speed setting section 61, the laser power setting section 62, the differential signal obtaining section 64, the calculating section 65, the judgment section 67, the recording/reproducing instruction section 70, the rotation speed setting section 71, the laser power setting section 72, the differential signal obtaining section 74, the calculating section 75, the offset amount obtaining section 77, and the determination section 78, each being configured by software, are stored so that a computer can read them, to the above sections, and then (ii) causing the computer (or CPU or MPU) to read and execute the program codes stored in the recording medium.

The storage medium can be, for example, a tape, such as a magnetic tape or a cassette tape; a disk including (i) a magnetic disk such as a floppy (Registered Trademark) disk or a hard disk and (ii) an optical disk such as CD-ROM, MO, MD, DVD, or CD-R; a card such as an IC card (memory card) or an optical card; or a semiconductor memory such as a mask ROM, EPROM, EEPROM, or flash ROM.

Alternatively, (i) the tracking instruction section 60, the rotation speed setting section 61, the laser power setting section 62, the differential signal obtaining section 64, the calculating section 65, and the judgment section 67 of the checking section 116 and (ii) the recording/reproducing instruction section 70, the rotation speed setting section 71, the laser power setting section 72, the differential signal obtaining section 74, the calculating section 75, the offset amount obtaining section 77, and the determination section 78 of the offset amount determining section 201 can be arranged to be connected to a communications network so that the program codes are delivered over the communications network. The communications network is not limited to a specific one, and therefore can be, for example, the Internet, an intranet, extranet, LAN, ISDN, VAN, CATV communications network, virtual private network, telephone line network, mobile communications network, or satellite communications network. The transfer medium which constitutes the communications network is not limited to a specific one, and therefore can be, for example, wired line such as IEEE 1394, USB, electric power line, cable TV line, telephone line, or ADSL line; or wireless such as infrared radiation (IrDA, remote control), Bluetooth (Registered Trademark), 802.11 wireless, HDR, mobile telephone network, satellite line, or terrestrial digital network. Note that, the present invention can be realized by a computer data signal (i) which is realized by electronic transmission of the program code and (ii) which is embedded in a carrier wave.

A method of the present invention for checking an optical information storage medium is a method for checking a quality of an optical information storage medium by irradiating a recordable recording layer of the optical information storage medium with a light beam and then receiving light reflected from the recording layer, the method including the steps of: (a) detecting levels of first light and second light, which are reflected from the recording layer and are received by first and second light receiving sections, respectively, the first and second light receiving sections being provided, in this order, in a track direction of the recording layer; and (b) judging a quality of the optical information storage medium based on a comparison result between the levels of the first light and the second light.

According to the method for checking an optical information storage medium, the first light receiving section and the second light receiving section, which receive light reflected from the recording layer, are provided in this order in the track direction of the recording layer of the optical information storage medium. This allows the levels of the first light and the second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in the beam spot, generated when the recording layer is scanned by the beam spot. This makes it possible to uniformize temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the track when the beam spot traverses the track, cannot be evaluated at a constant linear velocity because a speed of the beam spot traversing the track varies depending on a degree of eccentricity of the optical information storage medium.

According to the method for checking the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in the optical information storage medium.

It is preferable that each of levels of the first light and the second light which are detected in the step (a) is an average of corresponding two levels of the first light and the second light obtained when rotating directions of the optical information storage medium are different.

According to the configuration, it is possible to suppress unevenness in differential signal caused by temperature distribution, inherent in pickup, occurred in the rotating direction of the optical information storage medium.

A method of the present invention for checking an optical information storage medium is a method for checking a quality of an optical information storage medium by irradiating a recordable recording layer of the optical information storage medium with a light beam and then receiving light reflected from the recording layer, the method including the steps of: (a) detecting, while irradiating the recording layer with a light beam having a first beam power, levels of first light and second light which are reflected from the recording layer and are received by first and second light receiving sections, respectively, the first and second light receiving sections being provided, in this order, in a track direction of the recording layer; (b) calculating a first difference between the levels of the first light and the second light detected in the step (a); (c) detecting, while irradiating the recording layer with a light beam having a second beam power which is higher than the first beam power, levels of third light and fourth light which are reflected from the recording layer and are received by the first and second light receiving sections, respectively; (d) calculating a second difference between the levels of the third light and the fourth light detected in the step (c); and (e) judging a quality of the optical information storage medium based on a comparison result between the first difference calculated in the step (b) and the second difference calculated in the step (d).

According to the method for checking the optical information storage medium, the first light receiving section and the second light receiving section, which receive light reflected from the recording layer, are provided in this order in the track direction of the recording layer of the optical information storage medium. This allows the levels of the first light and second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in a beam spot, generated when the recording layer is scanned by the beam spot. This makes it possible to carry out a comparison in a case where a beam power is high while uniformizing temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the track when the beam spot traverses the track, cannot be evaluated at a constant linear velocity because a speed of the beam spot traversing the track varies depending on a degree of eccentricity of the optical information storage medium.

According to the method for checking the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in the optical information storage medium.

Moreover, according to the method for checking the optical information storage medium, a difference between levels of first light and second light is calculated every time the optical information storage medium is irradiated with each light beam having different beam power. The quality of the optical information storage medium is judged based on a compared result of the differences thus calculated.

This makes it possible to carry out a more accurate checking than a checking with the use of levels of reflected light obtained by irradiation of a single beam power.

It is preferable that each of the levels of the first light and the second light which are detected in the step (a) is an average of corresponding two levels of the first light and the second light obtained when rotating directions of the optical information storage medium are different, and each of the levels of the third light and the fourth light which are detected in the step (c) is an average of corresponding two levels of the third light and the fourth light obtained when rotating directions of the optical information storage medium are different.

According to the configuration, it is possible to suppress unevenness in differential signal caused by temperature distribution, which inherent in pickup, in the rotating direction of the optical information storage medium.

It is preferable that, in the step (e), a variation between the first difference and the second difference is compared with a predetermined reference value, and the optical information storage medium is judged to have a fair quality when the variation is smaller than the predetermined reference value, the predetermined reference value being in advance set for judging, based on which, whether the optical information storage medium is defective.

According to the configuration, it is possible to judge a quality of the optical information storage medium by comparing the variation with the reference value. This makes it possible to efficiently check the optical information storage medium 4.

It is preferable that the level of each light detected by the first and second light receiving sections is an amplitude of a wobble signal, which is derived from meandering of a track on the recording layer.

According to the configuration, it is possible to realize a state identical to a state where the beam spot traverses the track. This makes it possible to carry out the checking of the optical information storage medium more accurately.

A method for producing an optical information storage medium of the present invention is a method for producing an optical information storage medium having a recordable recording layer, which method includes the steps of: (a) producing an optical information storage medium by providing, on a substrate, a multilayer configuration in which the recording layer is contained; and (b) judging a quality of the optical information storage medium, which is produced in the step (a), by use of a method for checking the optical information storage medium.

According to the method, the method for producing an optical information storage medium contains the method for checking the optical information storage medium.

The optical information storage medium of the present invention is produced by the use of the method for producing the optical information storage medium.

The optical information storage medium is produced by the method for producing an optical information storage medium.

A checking device of the present invention is a checking device for checking a quality of an optical information storage medium by irradiating a recordable recording layer of the optical information storage medium with a light beam and then receiving light reflected from the recording layer, the checking device including: first and second light receiving sections which are provided, in this order, in a track direction of the recording layer; a detecting section which detects levels of first light and second light, which are reflected from the recording layer and are received by the first and second light receiving sections, respectively; and a judging section which judges a quality of the optical information storage medium based on a comparison result between the levels of the first light and the second light.

According to the checking device for the optical information storage medium, the first light receiving section and the second light receiving section, which receive light reflected from the recording layer, are provided in this order in the track direction of the recording layer of the optical information storage medium. This allows the levels of the first light and the second light, received by the respective first and second light receiving sections, to be indicative of respective levels obtained in a state where a linear velocity, at which the recording layer is scanned by a spot of a light beam with which the recording layer is irradiated, is maintained at a constant velocity.

In other words, it is possible to uniformize temperature distribution, in the beam spot, generated when the recording layer is scanned by the beam spot. This makes it possible to carry out a comparison in a case where a beam power is high while uniformizing temperature distribution in the beam spot, which temperature distribution inherent in pickup under ordinary circumstances.

Moreover, in a case where, for example, the first and second light receiving sections are provided in a transverse direction with respect to the track of the recording layer, the "super ROM phenomenon", which occurs in each of the inner periphery side and the outer periphery side of the recording layer, cannot be evaluated at a constant linear velocity because a speed of the beam spot traversing the track varies depending on a degree of eccentricity of the optical information storage medium.

According to the checking device for the optical information storage medium, the first and second light receiving sections are provided in the track direction. This makes it possible to evaluate the optical information storage medium at a constant linear velocity by rotating the optical information storage medium at an arbitrary rotating speed.

It is therefore possible to evaluate and sort out, with a predetermined standard, an optical information storage medium in view of an off-track recording which occurs in the optical information storage medium.

It is preferable that each of levels of the first light and the second light which are detected by the detecting section is an average of corresponding two levels of the first light and the second light obtained when rotating directions of the optical information storage medium are different.

According to the configuration, it is possible to suppress unevenness in differential signal caused by temperature distribution, inherent in pickup, occurred in the rotating direction of the optical information storage medium.

An optical information storage medium of the present invention has a recording layer onto which information is recorded by irradiating the recording layer with a light beam, and in a case where the optical information storage medium is checked by the method, the recording layer is set so that the first difference and the second difference become substantially equal to each other, when the second beam power is a predetermined power which is higher than the first beam power.

That is, the optical information storage medium of the present invention has a recording layer onto which information is recorded by irradiating the recording layer with a light beam. When the recording layer is irradiated with a light beam having a first beam power, levels of first light and second light which are reflected from the recording layer and are received by first and second light receiving sections, respectively, are detected. Note that the first and second light receiving sections are provided, in this order, in a track direction of the recording layer. Then, a first difference between the levels of the first light and the second light is calculated. Moreover, when the recording layer is irradiated with a light beam having a second beam power which is higher than the first beam power, levels of third light and fourth light which are reflected from the recording layer and are received by the first and second light receiving sections, respectively, are detected. Then, a second difference between the levels of the third light and the fourth light is calculated. When the quality of the optical information storage medium is judged based on a comparison result between the first difference and the second difference, the recording layer is set so that the first difference and the second difference become substantially equal to each other, when the second beam power is a predetermined power which is higher than the first beam power.

When the optical information storage medium is checked by the method for checking, the optical information storage medium is judged to have a fair quality.

An optical information storage medium of the present invention has a recording layer onto which information is recorded by irradiating the recording layer with a light beam via an objective lens, the recording layer having grooves being provided at a track pitch which falls within a range between 0.30 µm and 0.34 µm, the light beam having (i) a beam power of 21 mW or more and (ii) a wavelength which falls within a range between 400 nm and 410 nm, and the objective lens having a numeric aperture which falls within a range between 0.84 and 0.86, and in a case where the optical information storage medium is checked by the method, the first difference and the second difference becoming substantially equal to each other, when the second beam power is 12 mW.

That is, the optical information storage medium of the present invention has a recording layer onto which information is recorded by irradiating the recording layer with a light beam. Note that the recording layer has grooves being provided at a track pitch which falls within a range between 0.30 µm and 0.34 µm, the light beam has (i) a beam power of 21 mW or more and (ii) a wavelength which falls within a range between 400 nm and 410 nm, and the objective lens has a numeric aperture which falls within a range between 0.84 and 0.86. When the recording layer is irradiated with a light beam having a first beam power, levels of first light and second light which are reflected from the recording layer and are received by first and second light receiving sections, respectively, are detected. Note that the first and second light receiving sections are provided, in this order, in a track direction of the recording layer. Then, a first difference between the levels of the first light and the second light is calculated. Moreover, when the recording layer is irradiated with a light beam having a second beam power which is higher than the first beam power, levels of third light and fourth light which are reflected from the recording layer and are received by the first and second light receiving sections, respectively, are detected. Then, a second difference between the levels of the third light and the fourth light is calculated. When the quality of the optical information storage medium is judged based on a comparison result between the first difference and the second difference, the first difference and the second difference become substantially equal to each other, when the second beam power is 12 mW.

When the optical information storage medium is checked by the method for checking, the optical information storage medium is judged to have a fair quality.

A recording device for an optical information storage medium of the present invention records information on a recordable recording layer of the optical information storage medium by irradiating the recording layer with a light beam, and includes: first and second light receiving sections which are provided, in this order, in a track direction of the recording layer; a detecting section which detects levels of first light and second light, which are reflected from the recording layer and are received by the first and second light receiving sections, respectively; and a determining section which determines, when recording information onto the recording layer, an offset amount based on a comparison result between the levels of the first light and the second light, the offset amount being occurred in a radial direction of the optical information storage medium.

According to the recording device for the optical information storage medium, the first and second light receiving sections are provided in the track direction. This makes it possible to evaluate the optical information storage medium at a constant linear velocity by rotating the optical information storage medium at an arbitrary rotating speed.

It is therefore possible (i) to evaluate an off-track recording, which occurs in an optical information storage medium, with a predetermined standard and (ii) to determine an offset amount which is used in the recording of the optical information storage medium based on an evaluated result.

This makes it possible to set an optimal offset amount for an optical information storage medium, in which an offset recording occurred, in reproducing the optical information storage medium. It is therefore possible to prevent defective reproduction.

It is preferable that each of levels of the first light and the second light which are detected by the detecting section is an average of corresponding two levels of the first light and the second light obtained when rotating directions of the optical information storage medium are different.

According to the configuration, it is possible to suppress unevenness in differential signal caused by temperature distribution, inherent in pickup, occurred in the rotating direction of the optical information storage medium.

Note that the present invention can also be expressed as follows. That is, a checking method of the present invention is a method in which a recording and/or reproducing device for an optical information storage medium is used, the recording and/or reproducing device including a light-receiving section which receives reflected light, which is generated when (i) a recordable optical information storage medium is irradiated with a converged light beam for recording and/or reproducing the recordable optical information storage medium and then (ii) the light beam is reflected from the recordable optical information storage medium, the light-receiving section being at least divided in a track direction, a difference between a first signal and a second signal being measured with each recording and/or reproducing power, the first signal being obtained from a first half region, which is obtained by dividing the light-receiving section in a scanning direction, when recording and/or reproducing the recordable optical information storage medium, the second signal being obtained from a last half region of the light-receiving section, and a quality of the medium being judged based on whether a predetermined signal is larger or smaller than a predetermined value in a range of recording and/or reproducing power.

A production method for producing an optical information storage medium of the present invention uses the checking method.

An optical information storage medium of the present invention is produced by the production method.

An optical information storage medium of the present invention is recorded and/or reproduced by the use of a recording and/or reproducing device for an optical information storage medium, the recording and/or reproducing device including the light-receiving section which receives reflected light, which is generated when (i) a recordable optical information storage medium is irradiated with a converged light beam for recording and/or reproducing the recordable optical information storage medium and then (ii) the light beam is reflected from the recordable optical information storage medium, the light-receiving section being at least divided in a track direction, in a case where the optical information storage medium is recorded and/or reproduced by the use of the recording and/or reproducing device, a difference between a first signal and a second signal falling within a predetermined range, in a range of recording and/or reproducing power for a predetermined signal, the first signal being obtained from a first half region, which is obtained by dividing the light-receiving section in a scanning direction, the second signal being obtained from a last half region of the light-receiving section.

A recording and/or reproducing device for an optical information storage medium of the present invention includes a light-receiving section which receives reflected light, which is generated when (i) a recordable optical information storage medium is irradiated with a converged light beam for recording and/or reproducing the recordable optical information storage medium and then (ii) the light beam is reflected from the recordable optical information storage medium, the light-receiving section being at least divided in radial and track directions, a tracking being carried out, when recording and/or reproducing the recordable optical information storage medium, based on a tracking signal, which is a differential obtained based on (i) a first signal obtained from an inner periphery region, in the radial direction, of the light-receiving section and (ii) a second signal obtained from an outer periphery region, after the recordable optical information storage medium is loaded into the recording and/or reproducing device, before carrying out a recording, the recording and/or reproducing device controlling (i) information obtained from a measured result, for each irradiation power, of a difference between a third signal and a fourth signal and (ii) a radial offset amount, the third signal being obtained from a first half region, in a scanning direction, of the light-receiving section by irradiating the recordable optical information storage medium with a converged light beam, the fourth being obtained from a last half region, in the scanning direction, of the light-receiving section, and the radial offset amount being indicative of an amount by which a center of a beam spot is shifted, based on information varying for each pickup included in the recording and/or reproducing device, from a tracking state with respect to a center of a radial direction of a track onto which information is to be recorded in a recording.

A recording and/or reproducing device for an optical information storage medium of the present invention includes a light-receiving section which receives reflected light, which is generated when (i) a recordable optical information storage medium is irradiated with a converged light beam for recording and/or reproducing the recordable optical information storage medium and then (ii) the light beam is reflected from the recordable optical information storage medium, the light-receiving section being at least divided in a radial direction, a tracking being carried out, when recording and/or reproducing the recordable optical information storage medium, based on a tracking signal, which is a differential obtained based on (i) a first signal obtained from an inner periphery region, in the radial direction, of the light-receiving section and (ii) a second signal obtained from an outer periphery region, after the recordable optical information storage medium is loaded into the recording and/or reproducing device, before carrying out a recording of information of contents used by a user, the recording and/or reproducing device (i) carrying out the recording while changing an offset amount in the radial direction in the recording and (ii) controlling the offset amount by reproducing the information.

In a case where the radial offset amount is not controlled when a recording is carried out, it is preferable that a radial offset amount of a tracking in carrying out a reproduction is determined based on information indicative of a degree of displacement in a recording position, and a reproduction is carried out.

The optical information storage medium of the present invention (i) has grooves, which are provided at a track pitch of 0.32 µm in a recording region and (ii) is recorded/reproduced with light having a wavelength falling within a range between 400 nm and 410 nm via an objective lens having a numeric aperture falling within a range between 0.84 and 0.86, information being recorded onto the optical information storage medium with a recording power of 21 mW or more, the first difference and the second difference are substantially identical to each other when the second beam power is 12 mW in the checking method.

A recording device for an optical information storage medium of the present invention records information onto the optical information storage medium by irradiating the optical information storage medium with a light beam, the recording device including (i) a first light receiving section and a second light receiving section which are provided, in this order, in a track direction of a recording layer of the optical information storage medium and (ii) a means for carrying out an offset compensation in tracking and radial directions when carrying out a recording, the means including the steps of: detecting levels of light reflected from the recording layer with the use of the first and second light receiving sections; and comparing levels of first reflected light received by the first light receiving section and second reflected light received by the second light receiving section.

### Industrial Applicability

The optical information storage medium of the present invention can be applied to (i) various optical information storage mediums such as (a) an optical-readable disk such as a CD, a DVD, an HD-DVD, or a BD, (b) a magnetic optical disk, and (c) a phase-change disk and (ii) a driving device for an optical information storage medium.

### Reference Signs List

- 10:: Light-transmitting layer
- 30:: Intermediate layer
- 50:: Substrate
- 60:: Tracking instruction section
- 61 and 71:: Rotation speed setting section
- 62 and 72:: Laser power setting section
- 63:: Check condition storing section
- 64 and 74:: Differential signal obtaining section (detecting section)
- 65 and 75:: Calculating section (detecting section)
- 66:: Differential signal storing section
- 67:: Judgment section
- 68:: Fair quality criterion storing section
- 69:: Display section
- 70:: Recording/reproducing instruction section
- 73:: Recording/ reproducing condition storing section
- 76:: Offset amount determining condition storing section
- 77:: Offset amount obtaining section
- 78:: Determination section
- 100:: Reproduction system
- 101:: Disk driving motor
- 102:: Optical pickup
- 102a:: Objective lens
- 102b:: Tracking driving coil
- 102c:: Focus driving coil
- 102d:: Half prism
- 102e:: Collimator lens
- 102f:: Semiconductor laser oscillator
- 102g:: Light amount detector
- 102h:: Converging lens
- 102i:: Cylindrical lens
- 102j:: Photoelectric converter
- 102j1, 102j2, 102j3, and 102j4:: Photodetector
- 103:: Laser controlling circuit
- 104:: Differential amplifier circuit
- 105:: Focus controlling circuit
- 106:: Tracking controlling circuit
- 107:: Phase difference detecting circuit
- 108:: Feed motor controlling circuit
- 109:: Motor controlling circuit
- 110:: Data reproducing circuit
- 111:: Feed motor
- 112:: Speed detector
- 113a, 113b, 113c, 113d, and 113e:: Adder circuit
- 114a, 114b, 114c, and 114d:: Amplifier circuit
- 115:: Controlling section
- 116:: Checking section
- 200:: Recording/reproducing system (recording device)
- 201:: Offset amount determining section
- 400:: Optical information storage medium

## Claims

1. A method for checking a quality of an optical information storage medium by irradiating a recordable recording layer of the optical information storage medium with a light beam and then receiving light reflected from the recording layer,
said method comprising the steps of:
(a) detecting levels of first light and second light, which are reflected from the recording layer and are received by first and second light receiving sections, respectively, the first and second light receiving sections being provided, in this order, in a track direction of the recording layer; and
(b) judging a quality of the optical information storage medium based on a comparison result between the levels of the first light and the second light.

2. The method as set forth in claim 1, wherein:
each of levels of the first light and the second light which are detected in the step (a) is an average of corresponding two levels of the first light and the second light obtained when rotating directions of the optical information storage medium are different.

3. A method for checking a quality of an optical information storage medium by irradiating a recordable recording layer of the optical information storage medium with a light beam and then receiving light reflected from the recording layer,
said method comprising the steps of:
(a) detecting, while irradiating the recording layer with a light beam having a first beam power, levels of first light and second light which are reflected from the recording layer and are received by first and second light receiving sections, respectively, the first and second light receiving sections being provided, in this order, in a track direction of the recording layer;
(b) calculating a first difference between the levels of the first light and the second light detected in the step (a);
(c) detecting, while irradiating the recording layer with a light beam having a second beam power which is higher than the first beam power, levels of third light and fourth light which are reflected from the recording layer and are received by the first and second light receiving sections, respectively;
(d) calculating a second difference between the levels of the third light and the fourth light detected in the step (c); and
(e) judging a quality of the optical information storage medium based on a comparison result between the first difference calculated in the step (b) and the second difference calculated in the step (d).

4. The method as set forth in claim 3, wherein:
each of the levels of the first light and the second light which are detected in the step (a) is an average of corresponding two levels of the first light and the second light obtained when rotating directions of the optical information storage medium are different, and each of the levels of the third light and the fourth light which are detected in the step (c) is an average of corresponding two levels of the third light and the fourth light obtained when rotating directions of the optical information storage medium are different.

5. The method as set forth in claim 3, wherein:
in the step (e), a variation between the first difference and the second difference is compared with a predetermined reference value, and the optical information storage medium is judged to have a fair quality when the variation is smaller than the predetermined reference value, the predetermined reference value being in advance set for judging, based on which, whether the optical information storage medium is defective.

6. The method as set forth in any one of claims 1 through 5, wherein:
the level of each light detected by the first and second light receiving sections is an amplitude of a wobble signal, which is derived from meandering of a track on the recording layer.

7. A method for producing an optical information storage medium having a recordable recording layer,
said method comprising the steps of:
(a) producing an optical information storage medium by providing, on a substrate, a multilayer configuration in which the recording layer is contained; and
(b) judging a quality of the optical information storage medium, which is produced in the step (a), by use of a method for checking an optical information storage medium recited in any one of claims 1 through 6.

8. An optical information storage medium produced by use of a method recited in claim 7.

9. A checking device for checking a quality of an optical information storage medium by irradiating a recordable recording layer of the optical information storage medium with a light beam and then receiving light reflected from the recording layer,
said checking device comprising:
first and second light receiving sections which are provided, in this order, in a track direction of the recording layer;
a detecting section which detects levels of first light and second light, which are reflected from the recording layer and are received by the first and second light receiving sections, respectively; and
a judging section which judges a quality of the optical information storage medium based on a comparison result between the levels of the first light and the second light.

10. The checking device as set forth in claim 9, wherein:
each of levels of the first light and the second light which are detected by the detecting section is an average of corresponding two levels of the first light and the second light obtained when rotating directions of the optical information storage medium are different.

11. An optical information storage medium having a recording layer onto which information is recorded by irradiating the recording layer with a light beam,
in a case where said optical information storage medium is checked by a method recited in claim 3, the recording layer being set so that the first difference and the second difference become substantially equal to each other, when the second beam power is a predetermined power which is higher than the first beam power.

12. An optical information storage medium having a recording layer onto which information is recorded by irradiating the recording layer with a light beam via an objective lens,
the recording layer having grooves being provided at a track pitch which falls within a range between 0.30 µm and 0.34 µm,
the light beam having (i) a beam power of 21 mW or more and (ii) a wavelength which falls within a range between 400 nm and 410 nm, and
the objective lens having a numeric aperture which falls within a range between 0.84 and 0.86, and
in a case where said optical information storage medium is checked by a method recited in claim 3, the first difference and the second difference becoming substantially equal to each other, when the second beam power is 12 mW.

13. A recording device for an optical information storage medium, said recording device recording information on a recordable recording layer of the optical information storage medium by irradiating the recording layer with a light beam,
said recording device comprising:
first and second light receiving sections which are provided, in this order, in a track direction of the recording layer;
a detecting section which detects levels of first light and second light, which are reflected from the recording layer and are received by the first and second light receiving sections, respectively; and
a determining section which determines, when recording information onto the recording layer, an offset amount based on a comparison result between the levels of the first light and the second light, the offset amount being occurred in a radial direction of the optical information storage medium.

14. The recording device as set forth in claim 13, wherein:
each of levels of the first light and the second light which are detected by the detecting section is an average of corresponding two levels of the first light and the second light obtained when rotating directions of the optical information storage medium are different.
